(19) Europäisches Patentamt
European Patent Office
Office européen des brevets

(11) **EP 4 379 615 A1**

(12) **EUROPEAN PATENT APPLICATION**

(43) Date of publication:
**05.06.2024 Bulletin 2024/23**

(21) Application number: **22306775.2**

(22) Date of filing: **02.12.2022**

(51) International Patent Classification (IPC):
***G06N 10/60*** (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **DA SILVA COELHO, Wesley**
**91300 Massy (FR)**
• **HENRY, Louis-Paul**
**91300 Massy (FR)**

(74) Representative: **Slingsby Partners LLP**
**1 Kingsway**
**London WC2B 6AN (GB)**

(54) **A QUANTUM-BASED METHOD AND SYSTEM FOR FINDING A SOLUTION TO A PROBLEM**

(57) A method of using a quantum-based system for outputting a variable for use with a first problem. A set of parameters is determined, for a second problem, for running the quantum-based system. The set of parameters are associated with at least one or more variables of the version of the second problem and enable the quantum-based system to output a plurality of solutions to the second problem. Each of the plurality of solutions is associated with a common set of quantum states of the quantum-based system and a different value of at least one of the said the variables of the second problem. The quantum-based system is run using at least the determined set of parameters to identify a set of one or more of the qubits corresponding to at least one of the solutions to the second problem. At least one solution to the second problem is determined to be a new variable for the first problem. The new variable is output for use with the version of the first problem.

Fig. 3    100

**Description**

<u>Field</u>

The field of the invention is in quantum-based systems for solving problems, in particular, but not exclusively, for solving large mathematical problems using adiabatic quantum-based systems.

<u>Background</u>

Quantum based systems such as quantum computers or quantum emulators have been used to solve different problems such as mathematical problems. In particular quantum-based systems have been used to solve graph-based problems.

One example of a graph-based problem is the graph colouring (GC) problem. Quantum heuristic solutions for the GC problem have received a great deal of interest. Most of the proposed solutions rely on quantum implementations of simulated annealing. S. Kumar and T. Vijay Kumar, in 'A novel quantum-inspired evolutionary view selection algorithm', Sadhana, 43(10):1-20, 2018, use Constrained Quantum Annealing (CQA) to solve the GC problem by reducing the Hilbert space dimension. The quantum annealing system here was set-up to output a single optimal solution.

Z. Tabi, K. H. El-Safty, Z. Kallus, P. H'aga, T. Kozsik, A. Glos, and Z. Zimbor'as, in 'Quantum optimization for the graph coloring problem with space-efficient embedding', 2020 IEEE International Conference on Quantum Computing and Engineering (QCE), pages 56-62. IEEE, 2020., introduce a space-efficient embedding for quantum circuits that solve the GC problem and present the performance gain for this method. The authors indicate the limitation of the existing Quantum Annealing (QA) hardware solutions by running various numerical simulations and comparing results obtained with standard and enhanced Quantum Approximate Optimization Algorithm (QAOA) circuits. The quantum annealing system here was set-up to output a single optimal solution.

Titiloye and Crispin, in 'Quantum annealing of the graph coloring problem. Discrete Optimization', 8(2):376-384, 2011, propose comparing Classical Annealing and QA in solving graph coloring problems. The QA algorithm used in the comparison utilizes the Path-Integral Monte Carlo for Quantum Annealing, which is a population-based extension to simulated annealing inspired by quantum mechanics. According to the authors, the QA algorithm outperforms its classical counterpart, and even finds the best algorithm solutions. The quantum annealing system here was set-up to output a single optimal solution.

Silva et al, in 'Mapping graph coloring to quantum annealing'; Quantum Machine Intelligence, 2(2):1-19, 2020., the authors start by formulating the Quadratic Unconstrained Binary Optimization Problem (QUBO). Silva et al., solve the problem using different approaches: QUBO with classical simulated annealing in a simulated quantum environment, using a D-Wave™ quantum machine, and reducing polynomial degree using both the D-Wave™ library and their implementation. The results show that both Simulated Annealing and QA produce good heuristics for the GC problem, although more solutions can be found using the quantum approach. The quantum annealing system here was set-up to output a single optimal solution.

Kwok and Pudenz in 'Graph coloring with quantum annealing', 2020; propose a comparison between a heuristic graph coloring approximation algorithm-based on Quantum Annealing-and a fully classical implementation. The metrics for calculating performance are success probability, wall clock time, and time-to-solution. For wall clock time and time-to-solution, the quantum solution performs better than its classical equivalents. As mentioned in Kwok and Pudenz, the classical algorithm takes significantly longer to return a graph colouring for all graph sizes. The same is also true in the case of time-to-solution. The probability of success for the classical algorithm is lower than the quantum algorithm in the case of smaller size graphs. As the authors mention, the results of their experiments suggest a potential quantum advantage. The quantum annealing system here was set-up to output a single optimal solution.

Fabrikant and Hogg, in 'Graph coloring with quantum heuristics'; AAAI/IAAI, pages 22-27, 2002, also present a quantum computer heuristic search algorithm for graph colouring. The authors consider the NP-complete case of 3 colours. For the problem representation, the authors introduce the idea of associating each node with a value from 0 to 3 (using two bits per node). As mentioned in this paper, '0 'represents an uncoloured node, and any other value represents a specific colour assigned to the node. Since the generalized Hamming distance underpins the quantum algorithm, using this representation means the distance between the states is a simple function of their bit strings. The quantum system here was set-up to output a single optimal solution.

Shimizu and Mori, in 'Exponential-time quantum algorithms for graph coloring problems'; Algorithmica, pages 1-19, 2022, present an exponential-space quantum algorithm computing the chromatic number using the Quantum Random Access Memory (QRAM); the authors also describe a polynomial-space quantum algorithm not using QRAM for the 20-coloring problem. Their main result is the theorem that states that, to solve the chromatic number problem, the running time for the exponential-space bounded error quantum algorithm using QRAM is $O(1.9140")$. The quantum system here was set-up to output a single optimal solution.

S. M. Ardelean and M. Udrescu, in 'Graph coloring using the reduced quantum genetic algorithm'; PeerJ Computer Science, 8:e836, 2022, propose an instantiation of the Reduced Quantum Genetic Algorithm (RQGA) that solves the graph colouring problem by using $|V|^2$ qubits. The proposed implementation solves both vertex and edge colouring, but the simulations run only on very small graphs (up to 5 vertices). The quantum system here was set-up to output a single optimal solution.

Vitali, G., et al., in a poster titled 'Towards optimal graph coloring using Rydberg atoms'; supercomputing 2021, November 14-19, Louis, MO, describes quantum-based heuristic to solve the Graph Colouring problem by iteratively solving a Maximal Independent Set (MIS) problem. A register of Rydberg atoms is constructed in such a way it directly maps on the geometric graph structure of the problem. This method uses the quantum system to solve a MIS problem wherein the quantum system is set-up to find only one optimal solution.

The above disclosures relate to the problem of graph colouring. However, graph colouring, albeit an important problem, is not the only problem that researchers are looking to solve using quantum approaches. The following disclosures generally relate to using quantum systems to solve problems.

Nguyen, M. et al., in 'Quantum optimization with arbitrary connectivity using Rydberg atom arrays'; September 2022, available online at Cornell university website: https://arxiv.org/abs/2209.03965, describe an encoding strategy to map a variety of computation problems with arbitrary connectivity to maximum weighted independent set (MWIS) problems on unit disk graphs. This was proposed to be implemented on neutral, trapped atoms interacting via Rydberg states. The proposed solving of MWIS problems requires the neutral atom implementation to be configured, in one run, to only find a single optimal solution. Further solutions require a new set-up of the neutral atoms. This new set-up comes at the expense of increased computation time and system resources, such as energy, to compute the atom position requirements and compute the drive signals for the new set-up and the energy needed to physically create the new set-up (i.e., the new register of the trapped neutral atoms).

Vercellino, C., et al., in 'Neural-powered unit disk graph embedding: qubits connectivity for some QUBO problems'; IEEE Quantum Week 2022, describes an approach to constrained unit disk graph-embedding using a system of Rydberg atoms. Neural networks were described to transform an initial embedding configuration, which does not match the quantum hardware requirements or does not account for the unit disk property, into a feasible embedding properly representing the target optimization problems. The quantum system here was set-up to output a single optimal solution.

Column generation is a method to solve difficult problems, such as large linear problems where the problem may be considered too large to consider all variables explicitly. Column generation start by solving the considered problem with a limited set of variables and then iteratively adds variables to improve the objective function. The iterative process stops when new variables cease to improve the objective function. Castillo J. and Pena-Brage F. in 'Optimization of a refinery scheduling process with column generation and a quantum annealer'; Optimization and Engineering (2022): 23:1471-1488, describe to decompose an original problem into to a master problem and two pricings sub-problems. One pricing sub-problem is solved using a quantum annealer whilst the other is solved using a classical solver, however both sub-problems are required to be solved before a variable is added to the master problem. Furthermore, the quantum annealer in Castillo is set-up, for any one run, to only find one optimal solution for its pricing problem. New solutions to the same problem in further iterations require a different annealing set-up which in turn requires further time and energy resource.

In summary, prior research in the area of solving problems with quantum system have focussed on configuring the quantum systems to output only a single optimal solution to a problem in a single execution. These existing approaches to solving problems, such as, but not limited to large linear problems, may be time and energy inefficient, especially when needing to re-set the parameters for running the quantum system again to execute another quantum computation.

Summary

The inventors of the present application have realised that problems that can be solved by at least considering solutions to related problems, such as, but not limited to column-generation-based methods, may utilise the quantum superposition principle of quantum-based systems in a way that is beyond which it has been previously considered. A quantum-based system that outputs a solution for use as a new variable in a related but different problem can be enhanced by being configured to output multiple feasible solutions rather than just one optimal solution.

Therefore, in a first aspect there is presented a method of using a quantum-based system for finding a group of one or more solutions to a version of a first problem; the quantum-based system associated with a plurality of qubits; the said one or more solutions being solutions that obey one or more constraints associated with the first problem; the method comprising: I) determining a set of parameters, for a version of a second problem, for running the quantum-based system; the second problem being associated with the first problem; the set of parameters: i) associated with at least one or more variables of the version of the second problem: ii) enabling the quantum-based system to output a plurality of solutions to the version of the second problem wherein each of the plurality of solutions is associated with: a common set of quantum states of the quantum-based system; a different value of at least one of the said variables of the version of the second problem; II) running the quantum-based system, using at least the determined set of parameters, to identify a set of one or more of the qubits; the identified qubits corresponding to at least one of the solutions to the version of the second problem; III) determining whether the said at least one solution to the version of the second problem can be a new variable for the version of the first problem; and either: IV) if the at least one solution to the version of the second problem can be a new variable; using the at least one solution to the version of the second problem as a new variable for the version of the first problem, for finding the group of one or more solutions to the version of the first problem; or, V) if the solution cannot be a new variable; then either: a) outputting no solution to the version of the first problem; or, b) using a previously determined solution to a previous version of the first problem. The first problem may be called the 'master' problem. Form of master problem are presented elsewhere herein. The second problem may be referred to as a 'pricing problem'. The determining whether the said at least one solution to the version of the second problem can be a new variable for the version of the first problem may including determining using a cost function.

In some examples a cost function may be transformed into a constraint in the second (pricing) problem. An example of a cost-function derived constraint may be:

$$\sum \bar{\pi}_u \omega_u > c$$

where: $\bar{\pi}_u$ is the weight of each variable $\omega_u$, and c is a given threshold, for example the value 1. Then, any feasible solution to the second problem has already an acceptable cost to become a new variable in the master/first problem.

Unlike prior art techniques which have set-up a quantum computer or other quantum-based system such as an emulator, to only find a single optimal solution, the method above may configure the quantum-based system to find multiple feasible solutions wherein one or more, or all of the feasible solutions can be used for generating new variables for the master problem (or 'first problem' in the first aspect above). Each of the feasible solutions can be found by re-running the quantum-based system with the same set-up parameters. Being able to use at least some of the same a) set-up parameters; and/or, b) running parameters, the time and resource taken to solve the master problem may be reduced or otherwise optimised.

The first aspect may be adapted according to any teaching herein, including but not limited to any one or more of the following features. The method of the first aspect may be used to determine one or more variables for the first problem wherein the first problem initial has no variables assigned for it. This situation may be referred to as a 'warm start'. Additionally, or alternatively, the method may be used to determine one or more new variables for the first problem wherein the one or more new variables are added to a set of pre-existing one or more variables for the first problem.

The first problem may be referred to as a master problem whilst the second problem may be referred to as the pricing problem. The first and second problems may be linked, directly or indirectly, through duality theory, e.g., the duality principle in mathematical optimization theory. The first problem may be a master problem and may have different versions of the problem. The first problem may be a minimisation problem. The first problem may be a linear problem. Some or all the variables in the first problem may be continuous. The first problem may be transformed from an initial non-linear problem. The first problem may be associated with one or more, linear constraints. Preferably all the constraints are linear. The first problem may be an extended formulation. The first problem may be configured, or otherwise defined, such that the number of variables and/or constraints grows exponentially as the size of the problem gets bigger. The different versions of the first problem may vary in the number and/or types of variables. The second problem may have different versions of the problem. The different versions of the second problem may vary in the number and/or types of variables and/or other variations. The second problem may be a maximisation problem.

The variables used in different versions of the first problem may comprise variables found from solutions from different versions of the second problem. For instance, a current version of the first problem may use:

a) one or more variables derived from the immediately previous version of the second problem; and
b) one or more variables derived from a further previous version of the second problem.

One or more versions of the first problem may therefore use variables derived from multiple versions of the second problem.

The quantum-based system may comprise comprising at least one of: a) an electronic computer configured to determine one or more outputs based on modelling a plurality of qubits; b) a quantum computer comprising a plurality of qubits.

The method may be configured such that: the version of the first problem comprises at initial set of, least one, previously determined variables; and, the new variable for the first problem is a different variable to any of the variables in the initial set.

In some examples the first problem may already comprise one or more variables before the first version of the second problem is executed.

The method may be configured such that: the initial set of previously determined variables corresponds to at least one first version of the first problem; and, the step of using the at least one solution to the second problem as a new variable for the first problem, comprises determining a second version of the first problem; the first version of the first problem being different to the second version of the first problem.

The first problem may therefore adapt over time to include more variables wherein each adaption includes one or more new variables constituting a further version of the problem.

The method may be configured such that: the version of the second problem is a first version of the second problem; the at least one solution to the first version of the second problem is a first solution; the set of one or more of the qubits is a first set of one or more of the qubits; the new variable is a first new variable; the method may further comprise: I) re-running the quantum-based system using at least the same determined set of parameters, to identify a second set of one or more of the qubits that is different to the first set of one or more qubits; the identified qubits of the second set corresponding to a second solution to the first version of the second problem; II) determining whether the said second solution the second problem can be a second new variable for the first problem; the second new variable to the first problem being different to the first new variable to the first problem; III) using the first and second new variables in the same version of the first problem, for finding the group of one or more solutions to the first problem. The determining whether the second solution to the second problem can be a second new variable for the first problem may including determining using a cost function. The quantum-based system may be run with different sets of parameters. For example, when you don't know exactly how to design the pulse to solve the related pricing problem and/or you want to try more than one pulse. In such examples, during the pulse shaping/optimization process (and after finding the (near-) optimal/last pulse), all feasible solutions may optionally be kept when doing such a search/optimization. Furthermore, optionally, the quantum-based system may be run several times with the same EM pulse, get the sampled solutions, change the pulse, run it several times, get the solutions of interest, change the pulse etc.

If running of the quantum-based system finds one of the feasible solutions, it may be re-run with the same set-up parameters and driving conditions to find a further variable for the same version of the first problem. This re-running may be executed a plurality of time to possibly find a plurality of new variables for the next version of the first problem. Each run provides one solution the problem embedded on the quantum-based system. Each time the quantum-based system is run it may find the same or a different one of the feasible solutions. The number of re-runs performed may be determined by different factors, for example the total number of re-runs could be the number of runs, in total that yield a set of solutions wherein each of the found solutions has been identified a sufficient number of times that no other, yet-unfound, solution to the second problem is likely. Each of the solutions found on the run and re-run(s) use the same quantum-based system execution parameters for each-re-run saves time and resource.

The method may be configured such that: the running of the quantum-based system is a first running; and, the re-running the quantum-based system is a second running; the first running and second running executing the same quantum-based computation such that the common set of quantum states for the first running are identical to the common set of quantum states for the second running.

The method may be configured such that: the version of the second problem is a first version of the second problem; the at least one solution to the first version of the second problem is determined to be a new variable; the set of parameters for the first version of the second problem is a first set of parameters; the method may further comprise: using the found group of one or more solutions to the version of the first problem to generate one or more weightings for the variables of a second version of the second problem; using the one or more generated weightings to determine a second set of parameters for the second version of the second problem; running the quantum-based system, using at least the determined second set of parameters, to identify a further set of one or more of the qubits; the identified qubits corresponding to at least one of the solutions to the second version of the second problem.

The method may be configured such that: one or more variables to the second problem is associated with a weighting; the cost function comprises a threshold; the step of determining whether the said at least one solution to the version of the second problem can be a new variable comprises: comparing the at least one or more weightings to the threshold. Comparing one or more weightings to a threshold may comprise: I) summing the weightings of the second problem variables assigned to the identified qubits of the solution to the second problem; each variable second problem associated with a different qubit; II) comparing the summed weighting to the threshold. Any of the threshold and/or weightings may comprise a numeric value. Optionally if the summed weighting is: greater than the threshold, or greater than or equal to the threshold; the method may determine that the solution is a new variable.

The set of parameters may comprise data for embedding the one or more weightings into the execution of the second problem on the quantum-based system. The embedding may comprise a parameter associated with an input used to interact one or more of the qubits. The input may comprise an electromagnetic signal for interacting qubit-particles. The embedding may comprise determining any of a duration, frequency detuning, Rabi frequency of an input electromagnetic signal for interacting at least two of the qubits. The method may comprise outputting a control signal for controlling the output of an electromagnetic source; the output of the electromagnetic source for interacting at least two of the qubits. The method may comprise, when running the quantum-based system, outputting an electromagnetic signal to input to and interact at least two of the qubits. Preferably all the qubits are interacted using one or more EM signals during the running of the quantum-based system.

The qubit particles may be qubit-atoms in a neutral atom quantum computer. Additionally, or alternatively, the embedding may comprise a parameter defining a relative position between at least two qubits. The set of parameters for embedding the one or more weighting may comprise data for embedding a plurality of weightings wherein each weighting corresponds to a different qubit of the quantum-based system. The method may further comprise, positionally moving at least a first qubit with respect to a different second qubit based on a weighting of at least one of the said first and second qubits. The moving may comprise using one or more atom positioners. The atomic positioners may comprise one or more optical tweezers. The method may comprise outputting a control signal for controlling an atom positioner.

The method may comprise determining the position of one or more qubit-atom-trapping sights, based on one or more weightings. The method may comprise outputting a control signal for controlling apparatus for generating one or more traps. The traps may comprise magneto-optic traps or optical tweezer traps. Each of the qubits of the quantum-based system may be associated with a different qubit.

The method may further comprise: the version of the first problem is a first version; determining, using a cost function, whether the said at least one solution to the second version of the second problem can be a further new variable for a second version of the first problem; and either: I) if the at least one solution to the second version of the second problem can be a new variable; using the at least one solution to the second version of the second problem as a further new variable for the second version of the first problem, for finding the group of one or more solutions to the second version of the first problem; or, II) if the at least one solution to the second version of the second problem cannot be a new variable; then using a previously determined solution to the first version of the first problem.

Each variable of the second problem may be associated with a weighting.

The method may be configured such that: I) the first problem is a graph problem, the graph comprising a plurality of vertices and at least one edge; II) the set of parameters being associated with least one of: the plurality of vertices; the at least one edge.

The method may be configured such that: I) the graph defines a first plurality of independent sets wherein each independent set comprises at least one or more of the vertices or edges; II) the step of: using the at least one solution to the version of the second problem as a new variable for the version of the first problem, for finding the group of one or more solutions to the version of the first problem; comprises: finding a group of one or more independent sets from a second plurality of independent sets; the first plurality of independent sets comprising the independent sets of the second plurality of independent sets; the second plurality of independent sets comprising at least the independent set associated with the identified solution.

The method may be configured such that: the quantum-based system comprises a quantum computer; and, the first set of parameters comprises at least one or more parameters for: a) configuring the quantum computer ready for use in outputting a solution; and/or, b) operating the quantum computer, after being ready for use.

The method may be configured such that prior to the determination of the new first variable, the first problem comprises no variables

Re-running to get a plurality of new variables for solving the first problem, the new variables being a set of new variables; the set of new variables being the only variables of the first problem.

The method may be configured such that the quantum-based system comprises a neutral atom quantum computer.

The method may be configured such that the set of parameters comprises data associated with any one or more of: i) the number of atoms used in the quantum computation; ii) the relative position of the atoms used in the quantum computation; iii) at least one of the characteristics of an electromagnetic signal used to control the interaction of the atoms used in the quantum computation.

The method may be configured such that at least one or more of: i) the number of atoms used in the quantum computation; ii) the relative position of the atoms used in the quantum computation; iii) at least one of the characteristics of an electromagnetic signal used to control the interaction of the atoms used in the quantum computation; is different between a first set of parameters for a first version of the second problem and a further set of parameters for a further version of the second problem. In the alternative, optionally, several set of parameters may be used for each version of the second (pricing) problem, wherein each set of parameters may be run least once. Furthermore, optionally, a subset or the said several sets of parameters may be selected to be run on the quantum-based system at least once.

In a second aspect there is presented a system for finding a group of one or more solutions to a version of a first problem; the said one or more solutions being solutions that obey one or more constraints associated with the first problem; the system comprising a processor configured to: I) determine a set of parameters, for a version of a second problem, for running on a quantum-based system; the quantum-based system associated with a plurality of qubits; the second problem being associated with the first problem; the set of parameters: i) associated with at least one or more variables of the version of the second problem: ii) enabling the quantum-based system to output a plurality of solutions to the version of the second problem wherein each of the plurality of solutions is associated with: a common set of quantum states of the quantum-based system; a different value of at least one of the said variables of the version of the second problem; II) control the running the quantum-based system, using at least the determined set of parameters, to identify a set of one or more of the qubits; the identified qubits corresponding to at least one of the solutions to the version of the second problem; III) determine whether the said at least one solution to the version of the second problem can be a new variable for the version of the first problem; and either: IV) if the at least one solution to the version of the second problem can be a new variable; the processor is configured to use the at least one solution to the version of the second problem as a new variable for the version of the first problem, for finding the group of one or more solutions to the version of the first problem; or, V) if the solution cannot be a new variable; then either the processor: a) outputs no solution to the version of the first problem; or, b) uses a previously determined solution to a previous version of the first problem. The determining whether the second solution to the second problem can be a second new variable for the first problem may including determining using a cost function.

The second aspect may be adapted according to any teaching herein, including but not limited to any one or more of the following features and optionally any of the optional features for the first aspect wherein the computer processor is configured to give effect to the optional method steps of the first aspect.

The system may comprise the quantum-based system. The quantum-based system may comprise a quantum computer. The quantum computer may comprise a neutral atom quantum computer. The neutral atom quantum computer may be configured to be controlled to run in an analogue mode of operation.

There is also presented in a third aspect a method of using a quantum-based system for outputting a new variable for use with a version of a first problem; the quantum-based system associated with a plurality of qubits; the method comprising: I) determining a set of parameters, for a version of a second problem, for running the quantum-based system; the second problem being associated with the first problem; the set of parameters: i) associated with at least one or more variables of the version of the second problem: ii) enabling the quantum-based system to output a plurality of solutions to the version of the second problem wherein each of the plurality of solutions is associated with: a common set of quantum states of the quantum-based system; a different value of at least one of the said the variables of the version of the second problem; II) running the quantum-based system, using at least the determined set of parameters, to identify a set of one or more of the qubits; the identified qubits corresponding to at least one of the solutions to the version of the second problem; III) determining, using a cost function, whether the said at least one solution to the version of the second problem can be a new variable for the version of the first problem; and, IV) upon determining that the said at least one solution to the version of the second problem can be a new variable for the version of the first problem, outputting the new variable for use with the version of the first problem.

The third aspect may be adapted according to any teaching herein, including but not limited to any one or more of the following features and, optionally any of the optional features listed above for the first aspect.

The method of the third aspect may be configured such that: I) if the at least one solution to the second problem can be a new variable; using the at least one solution to the version of the second problem as a new variable for the version of the first problem, for finding the group of one or more solutions to the version of the first problem; or, II) if the solution cannot be a new variable; then either: a) outputting no solution to the version of the first problem; or, b) using a previously determined solution to a previous version of the first problem.

There is also presented a non-transitory computer readable medium comprising instructions for executing any one or more of the methods described in the first aspect. The method of the first aspect may be a computer implemented method. In this respect computer implemented is intended to mean implemented by a classical computer.

The method may therefore be a computer implemented method. Any one or more of the following may be computer implemented: a) determining sets of parameters may be computer implemented; b) the step of using the first problem to find the group of one or more solutions may be computer implemented. The term 'computer implemented' herein means implementation by one or more classical electronic computers, examples of which are provided elsewhere herein.

Brief description of the figures

Embodiments of the present invention will now be described in detail with reference to the accompanying drawings, in which:

Figure 1 is an example sequence of steps arising from an execution of the method described herein;

Figure 2 is an example of a system described herein;

Figure 3 is a flowchart of steps for an example of the method described herein;

Figure 4 is an example of a graph for use with the method described herein;

Figure 5 is a further example of a graph for use with the method described herein;

Figure 6 is an example of a Greedy algorithm for solving a minimum vertex colouring problem;

Figures 7a-7f are results showing the number of iterations when comparing the method presented against other methods;

Figures 8a-8f are results showing the gap when comparing the method presented against other methods;

Figure 9 is a schematic example of a neutral atom quantum computer for optional use with the method and system herein;

Figure 10 is a detailed example of a neutral atom quantum computer for optional use with the method and system herein;

Figures 11a-11c are examples showing atom transitions between ground and Rydberg states;

Figures 12a and 12b exemplify the Rydberg blockade;

Figure 13 shows an example of a Node-atom remapping algorithm.

Detailed description

There is presented a method of using a quantum-based system for use with solving a mathematical problem. The problem may be any mathematical problem including any of the problems listed elsewhere herein including, but not limited to, an optimisation problem, for example, a combinatorial optimisation problem. The problem may be a graph problem or a non-graph problem. This 'problem' may be referred to as a 'first' problem wherein the term 'first' is merely denoting the problem from other problems used with the method. The first problem may be related to an overall considered problem, such as, but not limited to a vertex colouring problem.

The method utilises a quantum-based system, such as an emulator (emulating a quantum computer) or a quantum computer, to aim to solve a further 'second' problem such that any solutions to the second problem can be used for generating a new variable for the first problem. Unlike prior uses of quantum-based system to solve problems, the quantum-based system in this method is set-up and run such that a plurality of feasible solutions to the second problem are permissible. The feasible solutions being those that satisfy one or more constraints associated with the second problem. Each of the feasible solutions to the second problem represents a valid output state of the modelled, or actual, quantum system. For examples where the quantum system is a quantum computer, such as a neutral atom quantum computer or a quantum annealer, each execution of the quantum computer outputs a single solution from a set of two or more possible feasible solutions. As discussed elsewhere herein, this may be affected by configuring the quantum computer (or otherwise the emulator) with a Hamiltonian designed to output a plurality of feasible states corresponding to common set of quantum states of the quantum-based system. Whilst a quantum computer may only output one of these feasible output states per execution, a quantum-emulator run on a classical computer may provide all solutions in one execution, but still the emulator models the Hamiltonian to have multiple feasible output solutions rather than just one. The quantum-based system may provide multiple feasible solutions by configuring a Hamiltonian to solve for output states associated with a threshold criterion.

An equivalent system is also presented to give effect to the method wherein the system may optionally include one or more classical computer processors that are used to perform any one or more of the steps of the method, including, but not limited to, determining any part of any version of any problem, executing any part of any version of any problem; determining parameters for executing a quantum computation, controlling the execution of a quantum computation.

The first problem may have different versions wherein each version typically differs from other versions at least from having at least one different variable. In some examples a starting version of the first problem may initially have no variables but may gain a variable from a solution to the second problem. In other examples a starting version of the first problem may already include one or more variables.

Optionally, the method may be performed iteratively in a plurality of ways. The second problem may be run on the quantum-based system a plurality of times to determine a plurality of solutions (for example, one solution per each run of a quantum computer), hence the method may generate a plurality of new variables for the same version of the first problem. When using a quantum computer, the method may therefore add a plurality of new variables for the same version of the first problem by running exactly the same second problem on the quantum computer numerous times. Because exactly the same version of the second problem is used, then exactly the same set-up and execution parameters may be used to generate multiple new variables for the same version of the first problem. Unlike prior techniques using the column generation method to generate one new variable from a secondary problem to add to the next version of the master problem, the method allows for multiple new variables generated per pricing problem executed. Advantages in the approach of the present method include, saving calculation time and the required energy in determining new second problems because fewer second problems may need to be generated for the set of first problem variables required to solve the overall considered problem. Thus, if using a quantum emulator as the quantum-based system, only a single execution of a single version of the second problem is required to generate multiple variables. When using a quantum computer, a plurality of executions (or 'runs') of the quantum computer can be made to generate a corresponding plurality of new variables wherein the quantum computer may use the same set-up configuration and driving parameters. Here time and energy may be saved from calculating such new parameters. Furthermore, when using quantum computers such as a neutral atom quantum computer (an example of which is described elsewhere herein) a single register of atoms may be initialised for a particular version of the second problem in accordance with a particular version of a Hamiltonian. This register may be re-used for each run of the second problem which, in turn, saves on time and energy calculating and physically setting up a new register. Furthermore, the driving electromagnetic (EM) radiation may be determined only once for the same version of the second problem.

The method may also successively generate one or more new versions of the first problem and attempt to solve the first problem to find one or more solutions. A new version of the first problem may include a new variable generated from the solving of the second problem. The method may also use different versions of the second problem. One or more solutions from solving a version of the first problem may be used to input into the solving of a new version of the second problem. Any one or more of the above iterative processes may be used. For example, only a single new variable may be generated and used for a particular version of the first problem but the subsequent solving of the first problem may then be used to feed into a new version of the second problem. The one or more solutions to the new version of the second problem may then, in turn, be used to generate further new variables for a further new version of the first problem, and so on such that the execution of the successive versions of the first problem and second problem may continue in a cyclical manner until a stopping criterion is met. This stopping criterion may include be one or more, or a plurality, of stopping criteria, including, but not limited to, determining that no new variables are to be generated for the first problem. In other examples, multiple solutions of the same version of the second problem may be used to generate corresponding multiple new variables for the same version of the first problem. For example, when the quantum-based system is a quantum computer, this may involve executing the quantum computer at least twice to find two or more of the feasible solutions. Each solution from each corresponding execution, may be used as candidate data for the generation of a new variable for use in the next version of the first problem.

Each solution to the second problem may be evaluated, using one or more cost functions, to determine if it is suitable to be a new variable for the next version of the first problem. For example, eight solutions may be generated from running the same version of the second problem at least eight times on a quantum computer wherein only six of those eight solutions are determined, from evaluation with respect to a cost function, to be variables for the next version of the first problem.

The cost function may be associated to the corresponding problem (e.g., to the second problem). For example, a solution may be determined to be suitable to be a new variable for the next version of the first problem if the variable causes the cost function to satisfy a specific condition (e.g., the variable maximizes the cost function, or minimizes the cost function).

In some embodiments, for example when the problem to be solved is a decision problem, evaluating the solution to the second problem to determine if it is suitable to be a new variable for the next version of the first problem may be done without using a cost function. For example, there may be no cost function defined in decision problems, unlike in optimization problems.

When a version of the second problem is run on a quantum computer, the number of runs made, of the same second problem version, may be determined by one or more rules or conditions. Such conditions may involve any of, but not limited to: a) continuing to re-run the same version of the second problem until no new solutions are found; or, b) continuing to re-run the same version of the second problem until no new solutions are found, and, at least one of the found solutions has been output a threshold amount of times. Condition b) above may be configured such that a plurality (or all) of the found solutions are output by the quantum computer a threshold number or times. For example, the same version of the second problem is run multiple times and five output solutions are found wherein and as soon as one of those solutions is output ten times, the running of that same version of the second problem is stopped and the method then progresses to a further step. Alternatively, in another related example, each of the five found solutions is required to be output a minimum of twenty times before the re-running of the same version of the second problem is stopped. It should be understood that the number of runs used in the above examples are merely used for exemplary purposes and that any number of runs or re-run-stopping conditions may be used.

Determining that the solution to the second problem is a new variable may be done at any time before the next version of the first problem is solved, for example, the determination that the solution is a new variable may be made before, during or after a further re-run of the same version of the second problem is executed.

Example of method using successive versions of first and second problems

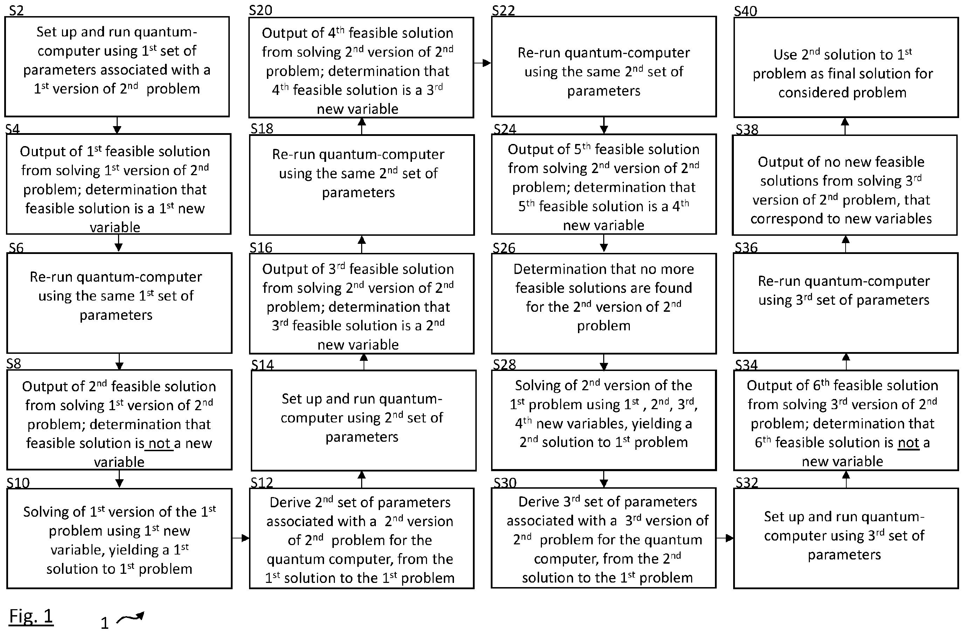

Figure 1 shows an example of how the method may use different versions of the first and second problems to solve the considered problem. It should be understood that features, steps and configurations in this example may be adapted by adding, removing or replacing other features, steps and configurations from other examples herein. Furthermore, features, steps and configurations in this example may be used to adapted other examples herein. Figure 1 shows an example timeline 1 of events and outcomes using the method. The events labelled S2-S40 do not represent all the events occurring in this example, but merely a summary of key points to show the reader an example of how the different problems and version may develop. This example assumes the use of a quantum computer as the quantum-based system and that a computer is used to calculate, or otherwise determine other data in the sequence of steps, although in principle a user may determine one or more of the outputs in the steps.

At step S2, the quantum-computer is set up and run using 1st set of parameters associated with a 1st version of 2nd problem. The first set of parameters may be arbitrary, random, or derived from a previous solving of the first problem. First problem may have no current variables prior to S2 or may have one or more variables prior to S2. In this example we are assuming that the first problem is without any initial variables.

At step S4, a 1st feasible solution to a 1st version of 2nd problem is output. In this example, a cost function is used to successfully determine that feasible solution is a 1st new variable.

At step S6, the quantum-computer is re-run using the same 1st set of parameters. It is noted that in principle any re-running of the quantum computer with the same parameters may be done before step S4 or time-overlapping with step S4 (and equivalently for other groups of runs of the quantum computer with a common set of parameters).

At step S8 a 2nd feasible solution to the 1st version of the 2nd problem is output. The same cost function as in S4 is used to determine that the feasible solution output from step S6 is not a new variable. After this step, but before step S10, the quantum computer may optionally be re-run a plurality of further times using the same 1st set of parameters to ensure no more feasible solutions to the second problem are found.

At step S10 a 1st version of the 1st problem is solved using the 1st new variable, yielding a 1st solution to 1st problem.

At step S12, a 2nd set of parameters is preferably derived from the 1st solution to the 1st problem. This new set of parameters is associated with operating the quantum computer to provide one or more solutions from a plurality of feasible solutions to a 2nd version of the 2nd problem.

At step S14 the quantum-computer is set-up and run using 2nd set of parameters.

At step S16 a 3rd feasible solution is output from solving 2nd version of 2nd problem. A determination that 3rd feasible solution is a 2nd new variable is made using the cost function.

At step S18, the quantum-computer is re-run using the same 2nd set of parameters.

At step S20, a 4th feasible solution from solving 2nd version of 2nd problem is output. A determination that 4th feasible solution is a 3rd new variable is made using the cost function.

At step S22, the quantum-computer is re-run using the same 2nd set of parameters.

At step S24, a 5th feasible solution from solving 2nd version of 2nd problem is output. A determination that 5th feasible solution is a 4th new variable is made using the cost function.

At step S26, a determination is made that no more feasible solutions that (corresponding to any new variables) are found for the 2nd version of 2nd problem. As discussed above, a similar step is omitted previously between steps S8 and S10, but may be inserted between these steps.

At step S28 a 2nd version of the 1st problem is solved using the 1st, 2nd, 3rd, 4th new variables, yielding a 2nd solution to the 1st problem.

At step S30, a 3rd set of parameters associated with a 3rd version of 2nd problem, for the quantum computer are derived from the 2nd solution to the 1st problem.

At step S32, the quantum-computer is set-up and run using the 3rd set of parameters.

At step S34, a 6th feasible solution from solving the 3rd version of the 2nd problem is output. A determination that 6th feasible solution is not a new variable is made using the cost function.

At step S36, the quantum-computer is re-run using the 3rd set of parameters.

At step S38, it is determined that no new feasible solutions to the 3rd version of the second problem correspond to any new variables.

At step S40, it is determined that the 2nd solution to the 1st problem (corresponding to the 2nd version of the

1st problem) is final solution for the considered problem.

In any of the above step in figure 1 where the quantum computer is set-up and run, as well as in other examples herein, the term 'setting up' may include any one or more of, but is not limited to:

a) Determining the number of qubits required for the solving of a version of the second problem;

b) Determining any initial states of qubits for the quantum computer, which may include any of position of any matter particles acting as qubits; initial atomic states of qubits;

c) Physically positioning any matter particles acting as qubits

d) The operation of any equipment required to enable the positioning and/or positioning or repositioning and/or maintenance of qubit position;

e) The number of control stimuli required and which one or more qubits the control stimuli are to be incident upon during the quantum computation period;

f) Any data or information otherwise required to determine the embedding of a Hamiltonian operator upon the quantum computer.

Furthermore, the running or re-running of a quantum computer may include anyone or more of:

g) Determination of any control stimuli, such as EM radiation, for executing a version of the second problem on the quantum computer; the determination may include any of polarisation, EM radiation pulse duration, Rabi frequency, frequency detuning, time-profiles (including time-varying profiles) of Rabi frequency, time-profiles (including time-varying profiles) of frequency detuning;

h) The physical realisation of any of the features in item g) above and the operation of any enabling equipment.

The running or re-running of the said quantum computer may also comprise or be followed by identifying a set of one or more of the qubits after executing a version of the second problem on the quantum computer.

For example, identifying the qubits may comprise measuring qubits to determine the states of one or more of the qubits, such as an excited state. The measurement output may be encoded in a bitstring comprising numerical values (such as 0 and 1) representative of the measured state of each of the qubits.

The sets of parameters used for any one or more of the versions of the second problem may use, but is not limited to, data, or otherwise information, corresponding to any one or more of the above options a-h. Further details of an exemplary neutral atom quantum computer for use with the method is discussed elsewhere herein.

Example system

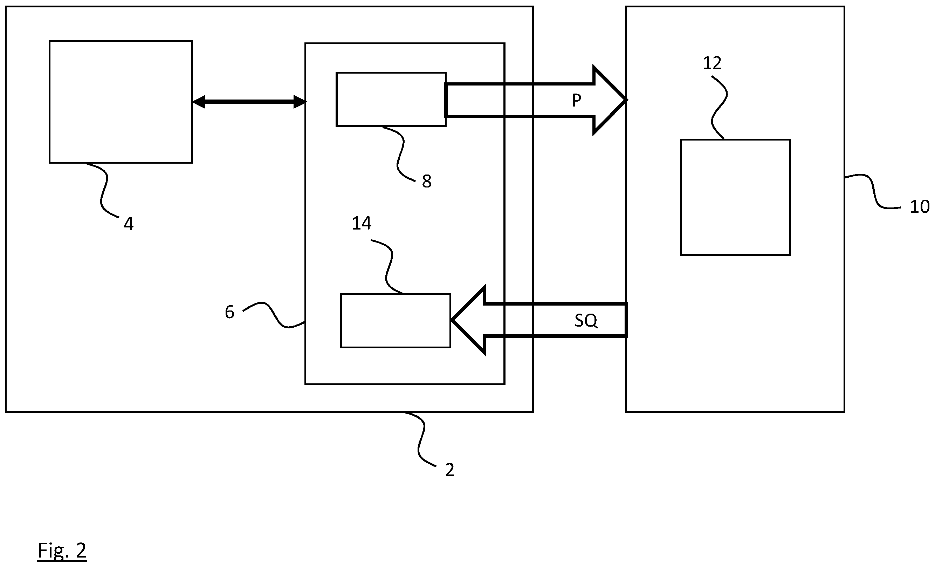

Figure 2 presents an example of a general schematic diagram representing a system 2 embodying an example of the method described herein. It should be understood that features, steps and configurations in this example may be adapted by adding, removing or replacing other features, steps and configurations from other examples herein. Furthermore, features, steps and configurations in this example may be used to adapted other examples herein.

The system 2 in this example is a system for outputting a new variable for use with a version of a first problem. The system 2 comprises a classical computer comprising at least one processor 4 in operative communication with at least one memory storage 6. Examples of computer systems are presented elsewhere herein. The memory storage 6 comprises a set of instructions 8, executable by the processor 4 for determining a set of parameters 'P', for a version of a second problem, for running the quantum-based system 10. The set of parameters 'P' are associated with at least one or more variables of the version of the second problem. In this example, once generated, the parameters 'P' are transmitted to control electronics (not shown) for driving the quantum system 10.

The system and quantum-based system, in this example and in any other example herein, may comprise transmitter and receiver components to send and receive information signals including the data, or otherwise information, described herein. The signals, in this and any other example herein, to transmit data may be any type or format of information signals, for example electrical or optical.

In general, the modules configured to perform the method may be hardware (for example dedicated hardware or firmware) or software implemented as shown in figure 1.

The parameters P are then used, optionally with other control signals, to run the quantum-based system 10 output a plurality of solutions to the version of the second problem. Each of the plurality of solutions is associated with: a) a common set of quantum states of the quantum-based system 10; and, b) a different value of at least one of the said the variables of the version of the second problem. The quantum-based system 10 in this example is a neutral atom quantum computer comprising a chamber 12 of neutral rubidium atoms that may each act as a qubit. The atoms are held in an array of magneto-optical traps that act to maintain a register of atoms that an electromagnetic (EM) driving signal is incident upon to interact the atoms over the duration of the execution of the quantum computation. Other quantum-based systems may be used including one or more other types of quantum computer or one or more quantum emulators executed on a classical computer that may be integral with or remote to the system 2.

The quantum-based system may optionally be part of an overall system that comprises the electronic-based system 2 and the quantum system. The running of the quantum-based system may be part of the method presented herein, or it may be separate to it. The running of the quantum-based system, using at least the determined set of parameters, is used to identify a set of one or more of the qubits 'SQ'. The identified qubits correspond to at least one of the solutions to the version of the second problem. The data corresponding to the set of qubits 'SQ' is transmitted to the system 2 to be used by a further set of instructions 14 that is executable by the processor 4 that determines, using a cost function, whether the said at least one solution to the version of the second problem (as represented by the set of qubits SQ) can be a new variable for the version of the first problem.

Optionally, the system 2 may have one or more sets of instructions (not shown) in the memory 6 that are executable by the processor to perform one or more further operations.

One further operation is, upon determining that the said at least one solution to the version of the second problem can be a new variable for the version of the first problem, the system may output the new variable for use with the version of the first problem. This output may then optionally be further used by the system 2.

Another further operation is, if the at least one solution to the second problem can be a new variable, the system may use the at least one solution to the version of the second problem as a new variable for the version of the first problem, for finding the group of one or more solutions to the version of the first problem. Alternatively, if the solution cannot be a new variable; then either the system outputs no solution to the version of the first problem; or, uses a previously determined solution to a previous version of the first problem.

Problems

The first problem may be the overall considered problem for solving or may be derived from a considered problem.

The problem may be a mathematical problem, which may be a convex problem. Such a problem may have a corresponding decision problem that may specify, for a given problem instance and for a solution quality bound b', to find a solution with an objective function value smaller (or greater) than (or smaller (or greater) than, or equal to) 'b'. Otherwise, there may be a determine that no solution exists. The mathematical problem may have an objective function to be maximised or minimised and may be: 'search variant' in that the problem sets out, for a given instance, to find the maximal or minimal objective function; or 'evaluation variant' in that the problem sets out, for a given instance, to find the optimal objective function. The mathematical problem may be associated with one or more logical condition which may be separate to or integral with the objective function.

The method may be used to solve one or more, preferably a plurality of different versions of the first problem to solve the overall considered problem. The considered problem may be a master problem. The master problem may be a restricted master problem (RMP), or a restricted master problem may be derived from an initial master problem. The RMP may be a version of the first problem. The master problem may comprise a first plurality of variables wherein is some examples the firstly plurality may be an extremely large number of variables that is difficult to solve for. The RMP may comprise a subset of the variables of the first set of variables such that the RMP may have a second plurality of variables wherein each of the variables in the second plurality is contained in the first plurality, but wherein the number of variables in the first plurality is greater than the second plurality. Hence the second plurality of variables is of the set of the first plurality of variables. The use of an RMP may be associated with the application of the column generation method.

There may also be one or more relaxed versions of the RMP. Such relaxed versions of the RMP (R-RMP) may be versions of the first problem. Optionally, any one or more constraints for the master problem may be the same or may be different to the RMP constraints. The RMP constraints may be adapted or otherwise derived from the master problem constraints. Optionally, any one or more constraints for the RMP may be the same or may be different to the R-RMP constraints. The R-RMP constraints may be adapted or otherwise derived from the RMP constraints. The second problem may be a pricing problem which in the context of this method may be referred to as a pricing sub-problem. The pricing sub problem in this example of the method may be linked to the RMP or R-RMP by duality theory such that the R-RMP (or RMP) is a version of the master problem, and the second problem is the pricing problem having the values of the dual variables from the a version of the first problem as coefficients multiplying one or more variables in a version of the second problem. In other words, values of the dual variables after solving a version of the master problem are used as coefficients that may be used to multiply some (potentially not all) variables of the pricing problem. Thus, the dual variables of the master problem become parameters in the pricing sub-problems whose values are given by the solution of the current version of the reduced master problem.

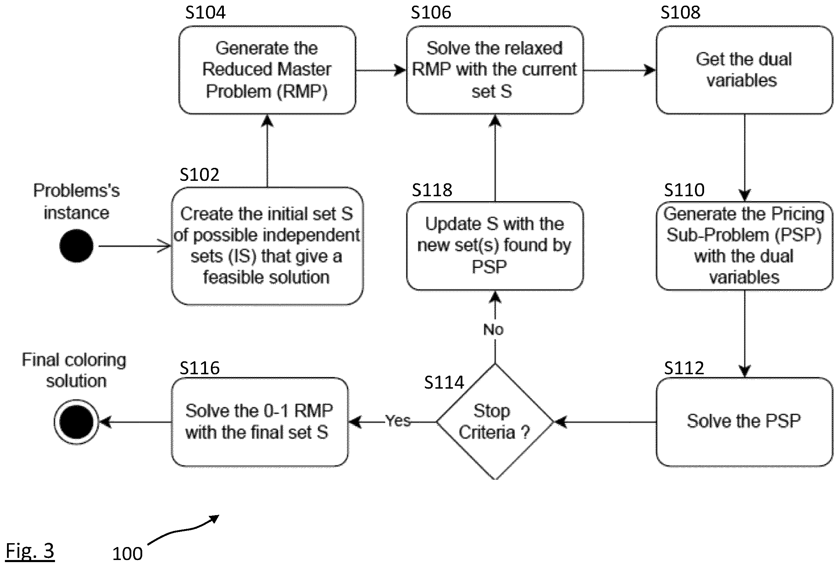

Figure 3 shows a further example of the implementation of the method described herein where there is an RMP, an R-RMP and a pricing sub-problem. Figure 3 is a flow chart 100 of operations and decisions wherein the problem is a vertex colouring problem. Some or all of the steps of figure 3 may be used for solving other considered problems. It should be understood that features, steps and configurations in this example may be adapted by adding, removing or replacing other features, steps and configurations from other examples herein. Furthermore, features, steps and configurations in this example may be used to adapted other examples herein.

As with other examples, any one or more of the steps, including controlling the running of the quantum computer, may be performed using one or more classical computers.

The method, or processes of figure 3 starts with the 'problem's instance' whereby the general problem of minimum vertex colouring is applied to a particular circumstance. The minimum vertex colouring problem is a graph labelling problem wherein different colours are different labels. The problem aims to obtain the minimum number of colours 'k' aiming such that there is no adjacent vertex sharing the same colour. Other related problems that may be solved include minimum edge colouring problems. A group of one or more graph vertices that may be assigned the same colour and be part of a feasible solution to the problem constitute an independent set.

At S102, an initial set 'S' of independent sets that give a feasible solution, is created. The initial set 'S' may contain independent sets derived manually by a user or a classical computer or by using the method described herein in a 'warm start' operation (as described elsewhere herein). In one example the initial set 'S' may be a set of independent sets wherein each independent set is simply each separate vertex having a different colour to any other vertex. The sets of S constitute the variables for the R-RMP.

At step 104, an RMP is generated.

At step 106, an R-RMP is determined from the RMP and solved using a classical computer. The R-RMP in this example is the first version of the first problem.

At step 108, the dual variables for the first version of the second problem are derived from the solution to the first version of the first problem.

At step S110, the pricing sub-problem (PSP) is generated with the dual variables.

At step S112, the PSP is solved using the quantum computer (or otherwise a quantum-based system). Within this step may be several executions of the quantum computer with the same set-up, to find multiple feasible solutions to the pricing problem. Alternatively, if a quantum emulator is used, a single execution of the emulator may be done wherein the emulator is configured to find a plurality of feasible solutions to the version of the pricing (second) problem. As described elsewhere herein, step S112 may be accomplished by configuring the quantum system to solve a Hamiltonian wherein feasible solutions include solutions corresponding to the threshold energy level, as opposed to a single optimal minimised energy level of the Hamiltonian.

At step S114, a stop criterion is assessed at a decision point. The stop criteria may be determining whether any new independent sets have been found in step S112. The decision to stop moves the process to step S116 whilst a decision to not stop proceeds the process to step S118. The stop criterion may be whether or not any new independents sets have been found over and above the set 'S' used in solving the immediately previous version of the R-RMP. More generally, the inner iteration loop is stopped when no column is generated after solving the related pricing sub-problem, meaning that the final solution is the optimal one for the relaxed formulation.

At step S116, the RMP is solved with the set of independent sets 'S' used for solving the immediately previous R-RMP in the process (in this figure only, the RMP is noted "0-1" RMP). From this, a final colouring solution may be found.

Alternatively, if any new sets are found by step S112, then these new sets are used to update, at step S118, the set of independent sets 'S' and a further (second version), R-RMP is determined and solved at step S106. The updating of the set 'S' of feasible independent sets may include any of: adding, replacing or removing the newly found sets to the existing sets in 'S'. For example, you can use the step S118 to remove other variables (independent sets) that are no longer needed to solve the master. Those variables that you might remove might be generated in previous steps.

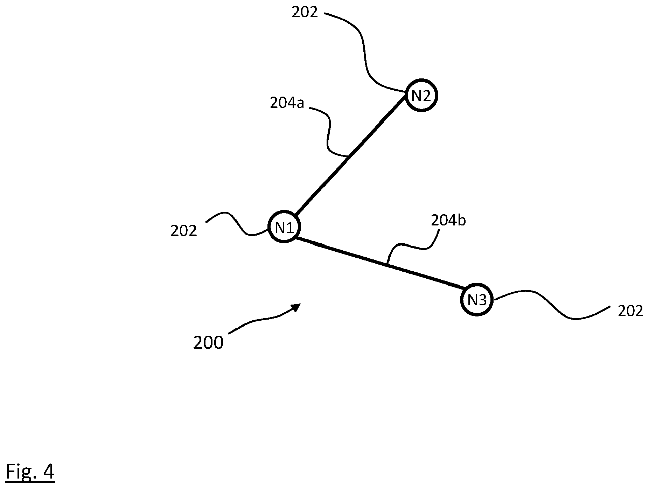

Figure 4 shows an example of a simple graph 200 comprising three nodes 202, labelled N1, N2, N3. An undirected edge 204a connects nodes N1 and N2 whilst an undirected edge 204b connects nodes N1 and N3. The considered problem in this example is the minimum vertex colour problem applied to this graph 200.

It should be understood that features, steps and configurations in this example may be adapted by adding, removing or replacing other features, steps and configurations from other examples herein. Furthermore, features, steps and configurations in this example may be used to adapt other examples herein.

In this example, an extended formulation is used for a master (considered) problem for the minimum vertex colouring problem. It is to be understood that other formulations of problems may be used. The below discussion sets out how a method could be used to solve this considered problem with respect to graph 200 wherein a quantum-based system is not used and then highlights how a method using a quantum-based system (such as a quantum emulator run on a classical computer or a quantum computer) would be used to solve the same problem.

It is to be understood that the example presented in figure 4, and as described below, is a simple example comprising a graph with three nodes wherein the present method of using a quantum-based system provides a technically alternative way of addressing and solving the same problem. However, as graphs (or generally other problems) get larger, for example a larger order graph, the benefits associated with utilising a quantum-based system start to become increasingly more apparent because of the manner in which the quantum-based system is utilised to output a plurality of feasible solutions with the same initialisation and running parameters. Turning back to the example in figure 3, step S118; because the present method is able to find a plurality of feasible solutions using the quantum-based system, more than one new set can be used to update the set 'S' of possible independent sets (IS) per version of the second problem. Therefore, the number of times the method has to go around the loop S106-S108-S110-S112-S114-S118 in figure 3, is minimised compared to processes that only add a single new set per iteration of, thus at least saving computational resource and time. It is to be noted that the process in Figure 3 is exemplifying finding independent sets for a minimum vertex colouring problem, but the method presented herein may be applied to other problems including other problems finding independent sets such as Maximum Independent Set (MIS), or other mathematical problems.

Other examples of other problems may include Maximum Weighted Independent Set, Weighted Independent Set, Cliques, Maximum Clique, Maximum Weighted Clique, Weighted Cliques, Vertex Cover, Minimum Vertex cover, Weighted Vertex Cover, Minimum Weighted Vertex Cover, Independent Edge Set, Maximum Independent Edge Set, Maximum Weighted Independent Edge Set, Weighted Edge Set. Other problems could be: any of the problems above wherein the word 'set' is replaced by 'sets'; any of the above problems where 'maximum/minimum' is replaced by 'maximal/minimal' respectively.

General example method for solving the minimum vertex colouring problem

Turning back to the solving of the graph in figure 4. For this and any other problem that may be solved by the method and system herein the following definitions may apply: let S be a set of all possible independent sets (IS) in the graph G = (V,E). The graph may be a directed graph with a set V = {u1, .., $u_{|V|}$} of nodes and a set E of edges. Also, let C be a set of available colours. The Minimum Vertex Colouring Problem, for this example in figure 4, consists in colouring the vertices of G with exact one colour from C such that no two adjacent vertices are of the same colour and the number of used colours is minimised.

Also, let $b_{us}$ be a binary parameter that holds 1 if the vertex u E V is present in the independent set s E S, 0 otherwise. Finally, let $z_s$ be a binary variable that takes 1 if the independent set $s \in S$ is selected; 0 otherwise. In other words, the variable $z_s$ is a discrete variable that can take only one of two possible values, 0 and 1 in this case.

The extended formulation expressed by equation [1], [2] and [3] minimizes the number of selected independent sets in such a way that each vertex of the graph is present in exactly one of them. In other words, we seek the smallest sub-set of independent sets that covers all vertices of the graph. Note that, by considering each independent set $s \in S$ as a colour assignment, the adjacency constraints related to the minimum vertex colouring problems are automatically respected.

$$min \sum_{s \in S} z_s$$

[Equ. 1]

$$\sum_{s \in S} b_{us} z_s \geq 1, \qquad \forall u \in V$$

[Equ. 2]

$$z_s \in \{0, 1\}, \qquad \forall s \in S$$

[Equ. 3]

Normally, without using the present method, finding all independent sets on a graph is a very hard task for larger graphs and can be very time and resource-consuming even for small graphs. Also, the number of all such sets, and hence the number of z variables, can be extremely large, which might potentially compromise the performance of the solver.

In principle, G has an exponential number of potentially suitable colouring represented by the related independent sets, the extended formulation in equations [1]-[3], admits an exponential number of variables (columns). Hence, in this example the method initializes the master problem with only a subset of columns (i.e., variables related to each s E S' ⊆ S for each s ∈ S) to create the RMP. Also, the integrality constraints in equation [3] are relaxed and therefore the R-RMP, for this particular considered problem, can be defined in equations [4], [5], [6]. For example, in the R-RMP, as explained by equation [6], the constraints on the variable $z_s$ are relaxed so that the variables $z_s$ can take any value in the continuous interval between 0 and 1, instead of being restricted to only two values O and 1, as in the non-relaxed RMP. The R-RMP is referred to elsewhere herein as the 'first' problem and may have different versions wherein each version may differ from other version at least by having at least one different variable to any other version.

$$min \sum_{s \in S'} z_s$$

[Equ. 4]

$$\sum_{s \in S'} b_{us} z_s \geq 1, \qquad \forall u \in V$$

[Equ. 5]

$$0 \leq z_s \leq 1, \qquad \forall s \in S'$$

[Equ. 6]

Using duality theory, the method further provides a dual formulation related to the R-RMP.

By associating the dual variable $\pi_u$ to each constraint in equation [2], we define the dual problem as follows in equations [7], [8], [9].

$$max \sum_{u \in V} \pi_u$$

[Equ. 7]

$$\sum_{u \in V} \pi_u b_{us} \leq 1, \qquad \forall s \in S'$$

[Equ. 8]

$$\pi_u \geq 0, \qquad \forall u \in V$$

[Equ. 9]

The separation of inequalities in equation [8] is part of the cost function of the pricing sub-problem related to the extended formulation in equations [4] - [6]. Hence, the pricing sub-problem consists in finding a new colouring set in such a way that all adjacency constraints would be respected while improving the solution cost of the RMP (i.e., decreasing the value of the objective function of the RMP in equation [4]). For this purpose, let $\overline{\pi_u}$ be the components

of the current dual solution of the R-RMP related to constraints in equation [5]. Hence, the pricing problem consists of finding a new independent set s such that equation [10] applies:

$$\sum_{u \in V} \bar{\pi}_u > 1$$

[Equ. 10]

In this example, the equation [10] requires that the sum of all active parameter given by the dual variables must be strictly superior to 1.

By setting each dual variable $\bar{\pi}_u$ as the weight of the related vertex u E V, finding a new independent set under such conditions comes to solving the following maximum weighted independent set formulation set out in equations [11], [12], [13].

$$max \sum_{u \in V} \bar{\pi}_u w_u$$

[Equ. 11]

$$w_u + w_v \leq 1, \qquad \forall (u, v) \in E$$

[Equ. 12]

$$w_u \in \{0, 1\}, \qquad \forall u \in V$$

[Equ. 13]

where $\omega_u$ is a binary variable that holds 1 if it is selected to be in the independent set; 0 otherwise. The inequalities in equation [12] ensure that the new set will respect the adjacency constraints.

The pricing problem in equation [11]- [13] , may also referred to herein as the 'second' problem and may have different version if the method is progressed iteratively. Each version of the second problem may be different to any other version of the same second problem by having a different set of variables $\omega_u$ and / or set of parameters (otherwise referred to as weights) $\bar{\pi}_u$.

When implementing the above method using or emulating a neutral atom quantum computer, the vertex weights used for solving the pricing sub problem [11]- [13] may be programmed into a Hamiltonian via a number of ways including individual atom detunings.

The method, in this and other examples, may therefore employ a hybrid approach wherein a first set of calculations, corresponding to solving the master problem and any associated restricted and relaxed version thereof, are executed with classical solver such as, but not limited to, an Integer Linear Program (ILP) solver or Linear Program (LP) solver. Examples of such solver may include, but are not limited to, any one or more of: using a Lagrange decomposition into binary decision diagrams; a GNU Linear Programming Kit (GLPK), a Coin-or branch and cut solver, a Gurobi solver. The solving of the second problem is using a quantum-based approach.

Quantum-based resolution of the pricing sub-problem

The pricing sub problem for the example in figure 4 and other examples herein, may be solved as follows. Let $\bar{\pi}$ be the vector of values given by the dual variables related to the solved relaxed RMP as previously discussed. The graph G' = (V ',E', $\bar{\pi}$ ) is then generated in such a way that V' = {u $\in$ V |$\bar{\pi}_u$ > 0} and E' = {(u, v) $\in$ E|$\bar{\pi}_u$ $\bar{\pi}_v$ > 0}. Also, for each vertex u E V ', the related weight is given by $\bar{\pi}_u$ belonging to the vector $\bar{\pi}$.

As previously described, the method and system herein utilise the quantum superposition principle. In one example of solving the pricing problem for this example in figure 4 and any other example herein, a Quantum Adiabatic Algorithm (QAA), may be used. An example of the quantum adiabatic algorithm is presented in T. Albash and D. A. Lidar. Adiabatic quantum computation. Reviews of Modern Physics, 90(1):015002, 2018, the entire contents of which are incorporated herein by reference. The QAA may be associated with a neutral atom quantum computer. The QAA may be run for the MIS problem on the related graph G' = (V ', E', $\overline{\pi}$) to, at least partially, solve the pricing problem. In this example, identifying qubits comprises identifying atoms in a specific quantum state (e.g., an excited state) during a measurement at the end of the algorithm.

The quantum adiabatic algorithm slowly evolves the modelled quantum system from an easy-to-prepare ground state to the ground state of the cost Hamiltonian $H_C$. If done slowly enough, the system of atoms stays in the instantaneous ground state. For a neutral atom quantum computer, the following parameters (Rabi frequency and detuning) are continually varied in time (t): Rabi frequency $\Omega(t)$, detuning $\delta(t)$, starting with $\Omega(0) = 0$ , $\delta(0) < 0$ and ending with $\Omega(0) = 0$, $\delta(0) > 0$ . The ground-state of H(0) corresponds to the initial state |00000> and the ground-state of H($t_f$) corresponds to the ground-state of $H_C$. To ensure that the system is not excited to states that do not form independent sets, an estimation may be made of the minimal distance between atoms that are not connected in the graph (this yields $\Omega_C$), and an estimation of the furthest distance between two disconnected atoms $\Omega_d$ . In unit-disk (UD) graphs, keeping the Rabi frequency $\Omega$ comprised in the interval [$Q_C$, $\Omega_d$] ensures that only independent sets are considered.. Regardless of the class of the graph (i.e., whether it is a UD graph), the method may set a maximum Rabi frequency $\Omega_{MAX} = \max(\Omega_C, \Omega_d)$. Even though this approach might change the graph connectivity represented by the blockade radius in the related register (if no UD realization is found for the original graph), the method is still able to generate independent sets that solve the pricing and master problems. Finally, the one or more independent sets among those sampled by the QPU may be selected. For example, only those whose total weight is greater than a given threshold.

In the neutral atom system, the atoms may be related to the vertices in V' , their positions remain unchanged. Then, the pulse shape is adjusted to the new register by calculating the new $\Omega_{max}$, which is done as previously proposed (i.e., by calculating the distance between each pair of qubits). Even though the atoms' positions may remain the same, changing the sub-set of atoms present in the register of each pricing iteration (by adjusting the Rabi frequency as explained above) may be enough to sample different independent sets. Also, new maximum value of Rabi frequency may be recalculated.

It should be noted that features of this above method may be used in other methods for other considered problems and their respective RMP and quantum-pricing problems; including, but not limited to any one or more of: any of the considerations for operating a real or emulated neutral atom quantum computer; any of the developments leading to the master and pricing problems including considerations for relaxing constraints and generation of variable sets for the master and pricing problems; the stopping criterion.

A side-example now follows that constructs an atom-register to represent an input graph to be coloured and then interactively generates new independent sets to a restricted master problem by running a quantum pricing algorithm.

Embedding random graphs into UD-disk representations is proven to be an NP-hard problem. Also, as one may anticipate, not all graphs have such a realization. In order to design a near-optimal register to represent any graph given as an input, we present here an example of an embedding approach based on the Fruchterman-Reingold algorithm as presented in T. M. Fruchterman, E. M. Reingold, "Graph drawing by force-directed placement", Software: Practice and experience, vol. 21, no. 11, pp. 1129-1164, 1991, incorporated herein by reference.

Algorithms based on force-directed principles are normally used to embed graphs into planes in such a way that two connected (resp. disjoint) vertices are placed close to (resp. far from) each other, with a minimum (resp. maximum) distance between them (resp. from the plane's center). In this context, in order to reflect inherent symmetries, Fruchterman and Reingold also propose an efficient algorithm to place the vertices evenly in the plane, making the edges' lengths uniform. For this purpose, each edge from the graph is treated as a spring that holds its endpoint vertices close to each other while a competing repulsive force is applied to push all vertices away from one another, even though they are not connected by an edge in the original graph. After enough iterations, the final system will reach equilibrium, minimizing then the difference between all attractive and repulsive forces.

In this example, the repulsive and attractive forces $f_r$ and $f_a$ between two nodes may be respectively given by:

$$f_r(u, v) = -k^2/r_{uv}$$

$$f_a(u, v) = d_{uv}^2/k$$

While k = (area/|V|)^(0.5), is set to be related to the area of the Euclidean plane, $d_{uv}$ holds the distance between the nodes $u, v \in V$. Finally, the total energy $f_t$ of the system is given by adding the forces between all pairs of vertices, as shown by:

$$f_t = \sum_{u,v \in \mathcal{E}} f_a(u,v) + \sum_{u \in \mathcal{V}} \sum_{v \in \mathcal{V}: u \neq v} f_r(u,v)$$

Therefore, $f_t$ goes to zero as the system approaches its equilibrium. This register embedding may be hereafter referred to as 'spring layout'. If such realization exists, the graph under consideration is naturally embedded as a UD graph if enough iterations are allowed (i.e., by iterating until the system reaches the equilibrium).

The proposed embedding strategy may be feasible on neutral atom-based Quantum Processing Units (QPUs) once the strategy respects the device's technical constraints, such as maximum distance from the register's centre and minimum distance between atoms. If any technical constraint is violated, one might re-scale every position vector by a factor $\alpha > 0$.

Once the initial register is created, the final register may have the same number of atoms as the number of vertices on the initial graph G. However, solving the pricing subproblem within the column generation framework might potentially imply finding one or more independent sets on a sub-graph H(G): this subgraph is generated with only the nodes with positive weight (i.e., the positive dual value provided by the solved restricted master problem). Creating a new register by running the Fruchterman-Reingold algorithm with the remaining nodes might potentially imply recalibrating the quantum device, which is not ideal due to the related time-consuming setup process.

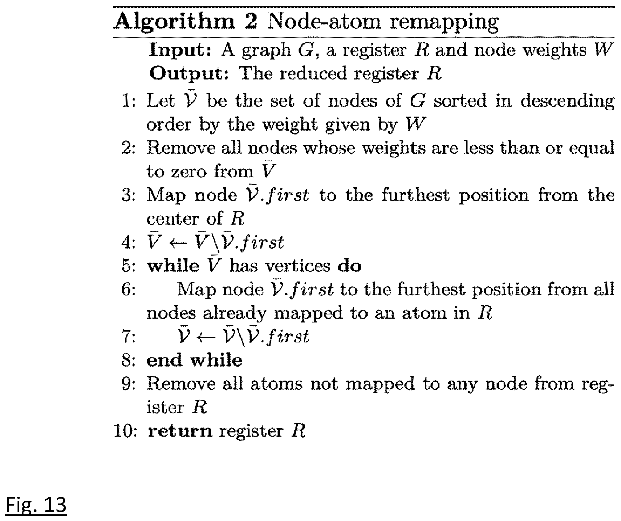

Instead of just removing the atoms mapped to the nodes that are no longer in the sub-graph H(G), the method may optionally take a node-atom remapping strategy that takes into consideration the nodes' weights (dual values). Algorithm 2 in figure 13 summarizes an example the main idea of this proposed approach: it receives a graph G = (V, E) a register R composed of a finite number of atoms and their positions within the QPU, and vector W representing the weights for all nodes in V.

First, let V be the set of nodes of G sorted in descending order by the weight given by W. Then, remove all nodes whose weights are less than or equal to zero from $\overline{V}$ (step 2), map the most weighted node to the further atom from the register's centre (step 3), and remove the remapped node from $\overline{V}$ (step 4). Then, the most weighted node in $\overline{V}$ is embedded into the furthest atom position from all atoms already mapped to a node in H(G), and removed from $\overline{V}$; these steps are done until all nodes from H(G) are mapped to an atom in the register R. Finally, all atoms not mapped to any node are removed from R (step 9). Since the proposed remapping strategy is applied to solve the pricing sub-problems, the weight vector W is generated with dual values provided by the solution of the current RMP, as previously mentioned.

An independent set sampler based on the quantum adiabatic approach may be used, as described above . As inputs, the quantum sampler may get an atom register and the pulse representing the designed Hamiltonian. Then, after running the proposed quantum sampler, different outputs are possible:

   1. Return only the largest independent set;
   2. Return all independent sets;
   3. Return all independent sets whose weights are greater than a given threshold;
   4. Return only the most weighted independent set;

For applying the two last strategies, a weight vector and a cost function as inputs may be needed to be provided to the quantum sampler. In this example, we applied the cost function of equation 11 to qualify any independent set; note that for unweighted graphs, this cost function can be applied by setting all weights to 1.

Bit-string qualification and stopping criterion

The method may apply the objective function in equation [10] to qualify each bitstring sampled by the QPU, the S' is then updated with all related sampled weighted independent sets whose total weight is strictly greater than 1. In other words, determining whether each solution (the bitstring sampled by the QPU) is suitable or not to be a new variable for the version of the first problem may comprise applying the objective function of equation 10 (the cost function), the solution being deemed suitable only if the condition associated to the objective function (in that example, the inequality requiring the sum of the dual variables to be strictly superior to 1) is satisfied. Moreover, the solution related to the sampled solution must respect the constraining equations [12] and [13]. In other words, it should represent an independent set on graph G' whose total weight is above a given threshold (1 in our example). In other examples, other objective functions may be used, for example, a version of equation [10] is used where we take only the sum, without the 'max'

For the stopping criterion, the method may stop the inner-loop (as represented, but not limited to the loop S106-S118) in figure 3 when no column is generated (variables) after solving the related pricing sub-problem, meaning that the last solution found to the first problem is the optimal one for the relaxed formulation in equation [4]-[6]. Then, a classically solved (e.g., via ILP) version of the final RMP is solved with all generated columns (i.e., variables/independent sets) and the integrality constraints in equation [3]. The immediately above step of classically solving the final RMP with all generated columns, is optional and may apply when the original master problem RMP has some integrality constraints as the equation 3. Some problems might not have this kind of constraint.

Determining the weights

In mathematical optimization theory, duality or the duality principle is the principle
that optimization problems may be viewed from either of two perspectives, the primal problem or the dual problem. If the primal is a minimization problem then the dual is a maximization problem (and vice versa). Any feasible solution to the primal (minimization) problem is at least as large as any feasible solution to the dual (maximization) problem. Therefore, the solution to the primal is an upper bound to the solution of the dual, and the solution of the dual is a lower bound to the solution of the primal. This fact is called weak duality.

In general, the optimal values of the primal and dual problems need not be equal. Their difference is called the duality gap. For convex optimization problems, the duality gap is zero under a constraint qualification condition. This fact is called strong duality.

In the linear case, in the primal problem, from each sub-optimal point that satisfies all the constraints, there is a direction or subspace of directions to move that increases the objective function. Moving in any such direction is said to remove slack between the candidate solution and one or more constraints. An *infeasible* value of the candidate solution is one that exceeds one or more of the constraints. In the dual problem, the dual vector multiplies the constraints that determine the positions of the constraints in the primal. Varying the dual vector in the dual problem is equivalent to revising the upper bounds in the primal problem. The lowest upper bound is sought. That is, the dual vector is minimized in order to remove slack between the candidate positions of the constraints and the actual optimum. An infeasible value of the dual vector is one that is too low. It sets the candidate positions of one or more of the constraints in a position that excludes the actual optimum.

In our example, the primal problem is the (R-)RMP, while the related dual problem is given by the formulation represented by the cost function [Equ. 7] and the constraints [Equ. 8] and [Equ.9].

In general, classical solvers also solve the dual problem when solving the primal counterpart. Hence, the solution for the dual problem, represented by the values obtained to each dual variable of the dual problem, can be easily obtained by either running a built-in solver's routine or calculating them directly by applying the duality principles. Then, at least one dual solution (i.e., at least one of the dual variables and their values) is translated into weight to at least one variable of the pricing sub-problem.

Several strategies can be applied in order to set up the coefficients that multiply the variable of the second problem. It can be done by randomly choosing a real value (not necessarily positive) to each multiplier or even applying a more complex approach. For instance, solved linear programs (such as the relaxed reduced master problem) always have equivalent dual counterparts. By applying duality principles, one can generate such dual solutions (potentially after solving the original/primal/first problem) and use some of the dual variables' values as coefficients that will multiply the variables of the second/pricing problem. In the case of solving the second problem using a neutral atom QPU, the found/generated weights/multipliers/coefficients can be used to drive the algorithm responsible for designing the register and/or the pulse. For instance, setting each weight to a specific node of the graph, one might put the most weighted nodes far/close from/to each other. Also, pulses might be locally addressed to each subset of nodes of the graph, where such node weights might drive the amplitude and/or detuning values choices.

In general, optimization problems can be modeled as following:

$$\max \ c^t x$$

$$\text{Subject to}$$

$$Ax \leq b$$

$$x \geq 0$$

Where x is a the (primal) variable vector, c is the multiplayer vector, A is a matrix with the same number of columns as the size of x, and b is parameter vector of the same size as the number of rows in A. This generic primal problem is hereafter referred to as P.

By applying the dual theory, one can generate the dual problem following some well-defined rules:

| Objective function: max | $\Leftrightarrow$ | Objective function: min |
|---|---|---|
| $i$th constraint is $\leq b_i$ | $\Leftrightarrow$ | $i$th variable is $\geq 0$ |
| $i$th constraint is $= b_i$ | $\Leftrightarrow$ | $i$th variable is unrestricted |
| $i$th constraint is $\geq b_i$ | $\Leftrightarrow$ | $i$th variable is $\leq 0$ |
| $i$th variable is $\geq 0$ | $\Leftrightarrow$ | $i$th constraint is $\geq b_i$ |
| $i$th variable is unrestricted | $\Leftrightarrow$ | $i$th constraint is $= b_i$ |
| ith variable is $\leq 0$ | $\Leftrightarrow$ | $i$th constraint is $\leq b_i$ |

Hence, the dual problem D related to P is:

$$\min \ b^t y$$

$$Subject\ to$$

$$A^t y \geq c$$

$$y \geq 0$$

Where y is a the (dual) variable vector. This generic dual problem is hereafter referred to as D.

Now, let x* be an optimal solution for P. Then, by applying the *Strong Duality Theorem,* we can find the optimal solution for D by solving the following problem:

$$c^t x^* = b^t y$$

$$A^t y \geq c$$

$$y \geq 0$$

Solving the above mathematical system gives an optimal dual solution y*., which can, in turn, be used as weights to the second/pricing problem. Several solvers solve the dual problem in parallel when solving the primal one and, hence, one can easily get access to the dual solution y* by calling some built-in solver's function. Otherwise, the mathematical system can be solved by another classical solver.

As described elsewhere herein, the quantum-based system may optionally be a neutral atom quantum computer or a classical computer emulating a neutral atom quantum computer. For such quantum-based systems, the system may be optionally set-up to run the second problem wherein the number of atoms may be equal to the number of vertices of a graph G. This is preferable for at least the initial version, or at least one version, of the second problem run on the quantum-based system. The mapping of number of nodes to atoms may vary over different versions of the second problem. This may be, for example, because the method may initially assign a non-zero weight to a vertex in an initial version of the second problem and then designate a weight of zero to a vertex for a further version of the second problem (for example a further version after the initial version). In this instance the atom representing the vertex may be moved out of interaction range of the other atoms by using suitable moving means such as optical tweezers. Alternatively, the atom-register for the further version of the second problem may be re-mapped such that at least one atom of the register represents a different vertex between two different versions of the second problem. For example, a register atom representing vertex 'A' in an initial version of the second problem with non-zero weight, may be remapped in a further version of the second problem to be representing vertex 'B'. The Vertex 'B' atom in the further version has a non-zero weight and is kept in the register, however a further atom now represents vertex 'A' due to the re-mapping. Vertex 'A' has a weight of zero and is therefore removed from the register.

In general, the method may therefore remove an atom from the register between a first version of the second problem and a second version of the second problem, wherein the two version may be immediately after each other. In some examples one or more atoms may represent an edge of a graph G. Distances between the atoms and the EM driving signals may be set by the weights. Computer may receive all the weights and determine the atom positions and the EM driving signals based off all the weights. In some examples where each register atom may be separately addressable by different EM driving signals, the position of the atoms may remain unchanged, and the weights may be implemented via the EM driving signals only. In an alternative, the register atoms may be individually addressable by respective different EM driving signals and the register atoms may be moved to jointly represent the weights.

Register and Hamiltonian design

Once the new weights for the second problem are calculated, the register may be modified from the previous steps to take into consideration the new weights for the related variables by adding, removing or/and moving one or a plurality of atoms. For instance, variables whose weights are smaller or greater than a threshold may be removed. Moreover, the atoms related to the most or least weighted variables of the second problem may be put further or closer from or to each other. In addition to re-designing the register, the Hamiltonian may also be designed to each new version of the second problem and the new weights may be considered. For example, a different pulse with a specific Rabi frequency and detuning values may be designed to at least one subset of atoms and taking into consideration the atoms' position and/or the related second problem's variables' weighting coefficients. Also, for a given version of the second problem, a plurality of registers and/or Hamiltonians (pulse) may be designed and run. Hence, different sets of variables may be generated to a new version of the first problem.

Problem types

The first problem may be an optimization problem, where the related cost function may be maximized or minimized or multi-objective, which may have several related and/or unrelated variables to be optimized. Moreover, the first problem may be a decision problem, where no cost function is to be optimized, but one or more constraints may be respected. The first problem may also be decomposed in a plurality of sub problems related the original one. All the aforementioned possibilities may also be applied to the second problem. The cost function (in case of an optimization version) of the second problem and the weights related to its variables and or parameters may be supported by duality principles, or another strategy defined by the algorithm designer (e.g., setting the weights randomly).

Applying the general method for solving the minimum vertex colouring problem to the graph of figure 4

We now apply the above RMP to the simple graph of figure 4.

An initial set 'S' of possible independent sets is provided wherein each independent set is a single graph vertex on its own, but no sets having multiple graph vertices.

The master problem, reflected by the (R-)RMP is trying to minimise the independents sets.

Expanding the R-RMP constraints in equation [5] to each graph vertex u and, as described above factoring that $b_{us}$ is a binary parameter and $z_s$ is a continuous variable, provides the following in equation [14]:

$$b_{us}z_1 + b_{us}z_2 + b_{us}z_3 = 1$$

[Equ. 14]

Thus, $b_{us}$ in this example in equation 14 must have at least one positive value.

We find equations [15], [16], [17] for the possible solutions to equation [14]; wherein equation [15] is for u=1 such that:

$$b_{11}z_1 + b_{12}z_2 + b_{13}z_3 = 1 \times z_1 + 0 \times z_2 + 0 \times z_3 = 1$$

[Equ. 15]

Equation [16] is for u=2 such that:

$$b_{21}z_1 + b_{22}z_2 + b_{23}z_3 = 0 \times z_1 + 1 \times z_2 + 0 \times z_3 = 1$$

[Equ. 16]

Equation [17] is for u=3 such that:

$$b_{31}z_1 + b_{32}z_2 + b_{33}z_3 = 0 \times z_1 + 0 \times z_2 + 1 \times z_3 = 1$$

[Equ. 17]

The solution to the first version of the first problem (the R-RMP problem) is therefore a vector [1, 1, 1] and minimised cost function of the value '3'. The vector [1,1,1] representing, for the initially provided set 'S' of independent sets, that the minimum number of independent sets with a cost of 3 corresponds to a single different colour for each graph node.

The method then uses a solver, run on a classical computer, to obtain the value to the dual variables $\overline{\pi}_u$ for each vertex u of the graph. In this worked example the solver gives the dual variables' values as:

$$\overline{\pi}_1 = 0,\ \overline{\pi}_2 = 1,\ \overline{\pi}_3 = 1$$

Note that the dual values for here are unitary or zero, but other values may be found as well such as, for example, 0.5 et.,. The dual values are then used as weights to the corresponding nodes in the graph G'. The weights may be continuous parameters. There are only three vertices in the graph of figure 4, therefore three weighted parameters are applied to the (maximum) pricing problem in equation 11, which, when expanded is presented in equation [18] with the constraints (derived from equation [12]) in equations [19], [20].

$$\max(\overline{\pi}_1\omega_1 + \overline{\pi}_2\omega_2 + \overline{\pi}_3\omega_3)$$

[Equ. 18]

$$\omega_1 + \omega_2 \leq 1$$

[Equ. 19]

$$\omega_1 + \omega_3 \leq 1$$

[Equ. 20]

In an alternative to equation [18], the 'max' may be removed such that the quantum algorithm is used more like a sampler than a solver.

Note that there is no constraint relating to $\omega_2$ and $\omega_3$ because no edge resides between them in figure 4.

The solver-found weights to equation [18] are used to initialise and run the quantum computer to yield a solution where $\omega_2 = \omega_3 = 1$, but $\omega_1 = 0$. Hence a new independent set is found of the vertices 2 and 3 in the graph 200 of figure 4.

The cost associated with this solution to this version of the second problem is therefore '2' because with $\omega_2 = \omega_3 = 1$ and: $\overline{\pi}_2 = 1$, $\overline{\pi}_3 = 1$; equation [18] sums to '2'.

The above process described above may be implemented on a quantum-based system to provide an alternative way of solving the problem.

The stopping constraint used in this example, as per equation [10], provides that if the cost of the solution to the second problem is greater than 1, then the solution output from solving the immediately previous version of the second problem is input as a new variable for the first problem. In other words, the newly found independent set {2,3} is used as a further new variable for a further version of the R-RMP set out in equations [4]-[6].

Therefore, since the cost of '2' is greater than '1', the method proceeds to add the solution of independent set of nodes N2 and N3 into a new version of the RMP as set out in equation [21], wherein $z_4$ is the new variable representing the independent set of nodes {2,3}.

$$b_{us}z_1 + b_{us}z_2 + b_{us}z_3 + b_{us}z_4 = 1$$

[Equ. 21]

Along with the new variable $z_4$, new $b_{us}$ parameters are also generated. In a similar manner to equations [15]-[16], the possible solutions to equation [21] are presented in equations [22], [23], [24] wherein equation [22] is for u=1 such that:

$$b_{11}z_1 + b_{12}z_2 + b_{13}z_3 + b_{14}z_4 = 1 \times z_1 + 0 \times z_2 + 0 \times z_3 + 0 \times z_4 = 1$$

[Equ. 22]

Equation [23] is for u=2 such that:

$$b_{21}z_1 + b_{22}z_2 + b_{23}z_3 + b_{24}z_4 = 0 \times z_1 + 1 \times z_2 + 0 \times z_3 + 1 \times z_4 = 1$$

[Equ. 23]

Equation [24] is for u=3 such that:

$$b_{31}z_1 + b_{32}z_2 + b_{33}z_3 + b_{34}z_4 = 0 \times z_1 + 0 \times z_2 + 1 \times z_3 + 1 \times z_4 = 1$$

[Equ. 24]

The output solution, solving for 'z' to this further (second) version of the first problem is therefore:

$z_1 = 1$, because it satisfies equation [22];

$z_4 = 1$, because it satisfies equations [23] and [24];

$z_2 = z_3 = 0$, because they satisfy equations [23] and [24].

Having the independent sets $z_1$ and $z_4$ as the solutions to this further version of the first problem is a cost of '2'. Comparing to the previous cost of '3' for the first version of the first problem, this updated version of the first problem provides an improved cost. Thus, the new variable $z_4$ representing IS with nodes {2,3} , presents a more optimised set of variables for the first problem to minimise.

A solver, run on a classical computer is then used, again, to find the weights associated with this above output solution to the further version of the first problem. The solver returns the weightings (for this particular example) $\overline{\pi_1} = \overline{\pi_2} = \overline{\pi_3} = 0.5$.

The above-found weightings are then used to initialise and run a further version of the second (pricing) problem in the quantum computer. In this run of the quantum computer the feasible solution output is the solution where $\omega_2 = \omega_3 = 1$, but $\omega_1 = 0$.

The cost associated with this solution to this further version of the second (pricing) problem is therefore '1' because with $\omega_2 = \omega_3 = 1$ and: $\overline{\pi_2} = \overline{\pi_3} = 0.5$ equation 17 sums to '1'.

Applying the same stopping criterion as before, the cost of this solution is not greater than '1', therefore the process of adding new variables to create another potential further (third) version of the first problem is stopped and the previous solution to the second version of the first problem is used as the final solution. It is noted that instead of using the previous said solution, the method may run the RMP, or the original master problem set out in equations [1]-[3], with the set of variables 'S' used to run the R-RMP for the second version of the second problem.

The output solutions to the problems in the worked example above are merely values and outcomes to illustrate the application of the method. In the above example the variables 'z' are given binary values of 0 or 1, however, generally, the R-RMP may use non-binary variables as set out in equation 6m for example taking values between 0 and 1. A re-run of the master problem set out in equations [1]-[3] may re-calculate the solution using binary variable values of $z= 0$ or 1. This re-run would preferably be a single, final re-run after all necessary versions of the (first) R-RMP problem have been executed.

The above example is worked by initially providing the initial set 'S' of variables (which in this example are independent sets). These values may be user derived or derived using a classical solver. They may also be derived from running the method such that the quantum-based system outputs one or more, preferably a plurality of feasible solutions, which can be used as the initial set of variables for the initial first version of the first problem.

Although the primary (first) problem in the above example or any example herein may be a minimisation problem and the second (pricing) problem is a maximisation problem, other examples of the method and system herein may have a maximisation problem as the primary problem and the pricing problem as the minimisation problem; or in reverse, in that the master problem is a maximisation problem whilst the pricing problem is a minimisation problem. The master and pricing problems may be linear problems in that at least no quadratics terms (such as in a QUBO), or higher may be involved. In other examples the master and pricing problems may be higher order.

Further example of the method and system

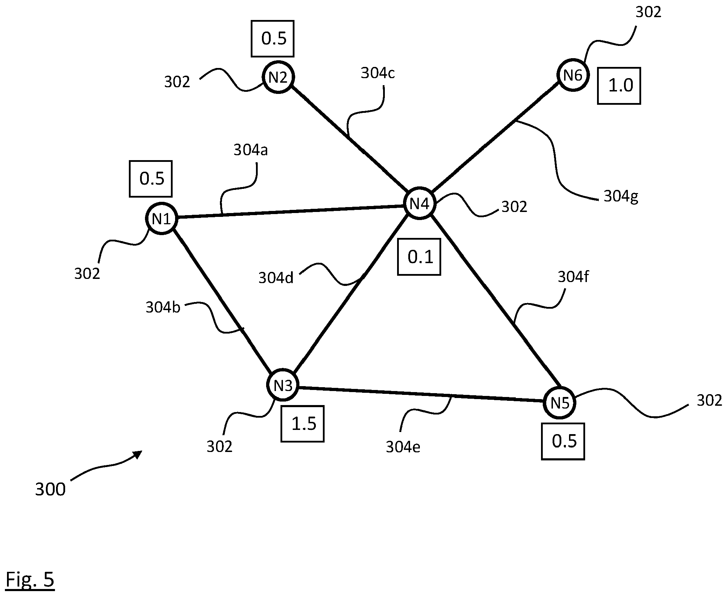

As discussed above, the worked example of figure 4 is a simple example to demonstrate calculations made using the method and how the quantum-based system may be used to input to the method to solve a considered problem. Figure 5 shows a more complex graph 300 comprising six nodes 302 labelled N1, N2, N3, N4, N5, N6 and seven edges labelled 304a-g. Alongside the nodes N1-N6 are values in boxes that are example weights $\overline{\pi_n}$ ('n' denoting the node number in figure 5) for each different node 302 derived from a solution to an immediately previous version of the first problem.

The weights in this example instance are as follows:

$\overline{\pi_1} = 0.5;$

$\overline{\pi_2} = 0.5;$

$\overline{\pi_3} = 1.5;$

$\overline{\pi_4} = 0.1;$

$\overline{\pi_5} = 0.5;$

$\overline{\pi_6} = 1.0.$

If a similar problem as described for figure 4 were applied to this graph 300, then the quantum-based system would not only output a single feasible solution, but multiple feasible solutions.

The independent sets and combined weights of the nodes in the independent sets for figure 5 are listed in table 1 underneath for finding the independent sets comprising two nodes. This situation may arise, for example, where a previous iteration of the method has already identified independent sets for the first problem, with only a single node in any one independent set. Alternatively, the method may begin by setting up the quantum-based system to just find independent sets with two nodes (or indeed any size). In another alternative situation, the method may have been manually pre-provided an initial set of all valid independent sets of single nodes that can be used as variables for the first problem.

Table 1

| Nodes in Independent set | Combined weight of the independent set |
| --- | --- |
| {N1, N2} | 1 |
| {N2, N6}* | 1.5 |
| {N2, N3}* | 2 |

(continued)

| Nodes in Independent set | Combined weight of the independent set |
|---|---|
| {N3, N6}* | 2.5 |
| {N1, N6}* | 1.5 |
| {N2, N5} | 1 |
| {N1, N5} | 1 |

For such a graph 300, an instance of solving a version of the second problem, only the independent sets marked with an '*' satisfy the constraint in equation [10] for making that independent set a new variable for a further version of the R-RMP. Unlike the simplified example of figure 4, there are multiple independent sets that are feasible solutions. One or more, preferably all, of these feasible solutions may then be used as new variables in the next version of the first problem. In other words, reverting back to figure 3,

All of these feasible solutions in Table 1 may be determined either using: a) a single run of a quantum emulator run on a classical computer; and/or, b) multiple runs of the same (second) problem on a quantum computer. This technique of generating multiple feasible solutions in this manner may be referred to herein as 'quantum pricing'.

As discussed elsewhere, the ability to find multiple feasible solutions from one version of the second problem to potentially generate multiple new variables for a further version of the first problem, saves in resource use such as time and energy.

Any quantum computer may be used to perform the method (at least because what is required to be able to set up the quantum computer to output a plurality of feasible output states), including any one or more of, but not limited to: quantum computers running in an analogue mode of operation; quantum computers running in a gated mode of operation; photonic quantum computers; ion-trap based quantum computers; neutral atom based quantum computers; quantum annealers; superconducting qubit quantum computers; or other types of quantum computers.

Preferably the method and system use a neutral atom quantum computer running in analogue mode wherein each run of the computer uses the same Hamiltonian and start atom relationships (for example relative position (optionally absolute position) and initial energy state). The 'atoms' referred to here are those atoms that act as qubits in the quantum computation. The qubits used for each run are preferably the same atoms in the same position as a previous run. The method and system may be configured to maintain at least one, preferably a plurality, preferably all of the qubit-atoms, in the same position in the quantum computer between two adjacently subsequent versions of solving the second problem. In other words, one or more qubit atoms, preferably all the qubit atoms in the register are held in position during the one or more quantum computer executions for a first version of the second problem and up to and at least throughout the one or more quantum computer executions for a second (next) version of the second problem. In alternative examples one or more of the atoms may be moved between different versions of the second problem. The movement may be based on a weighting assigned to the moved qubit wherein the qubit represents a variable of the second problem.

The same or similar considerations of maintaining one or more aspects (qubit energy, qubit position, other qubit configuration) of the quantum computer between may apply to other types of quantum computers that may be used with the method and system.

An example of the operation and components of a neutral atom quantum computer are described elsewhere herein and any of features of that computer example may be used with any examples of the method/system described herein. In summary, an initial register of traps is formed, and atoms are then introduced into at least some of the traps, one atom per trap. The atoms are then rearranged or otherwise moved into the traps of interest for the computation. Before, during or after the required atoms are set in their desired position, an EM pulse is determined that corresponds to solving the Hamiltonian of the quantum system represented by the atoms. The EM pulse is then input onto the atoms. There may be a single EM pulse for affecting all atoms or multiple EM pulses for addressing at least two different atoms.

At the end of the computation, the register can be read out to measure the state of the atoms (identify the qubits), for example using an image sensor, such as a CCD sensor, to acquire a fluorescence image of the atoms in the register.

The above optional considerations and any other teachings from this worked example pertaining to figures 4 or 5 or generally to the use of quantum computers, may apply generally to any of the methods and systems presented herein, including any of: the ways in which the cost functions are implemented, weighting calculations, the use and evolution growth of the first and second problems, the initialisation of the method and the final stages of calculating the final solution to the method.

Comparison of an example of the present method using quantum-pricing, to other methods

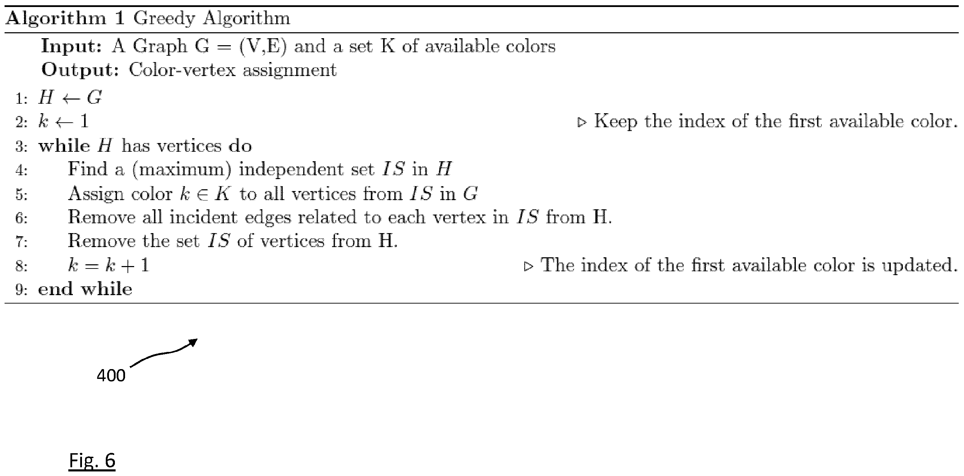

Figure 6 shows code for a 'Greedy Algorithm' 400 used to test the present method against other approaches to solving the minimum vertex colouring problem. The algorithm 400 is 'greedy' because it is a heuristic configured to make the locally optimal choice at each stage. The algorithm 400 interactively solves the Maximum Independent Set (MIS) problem with only a subset of the vertices of a given graph. As input, the algorithm 400 receives a graph G = (V,E) and a set K of available colours. Note that, to always have a feasible colour assignment in this algorithm 400, $|V| \leq |K|$ must hold. First, a copy of G is made with variable H. A variable k is also created: 'k' keeps the index of the first available colour. Then, steps 3-7 in the algorithm 400 are done until no vertex remains in H. On each iteration, a feasible independent set in H, potentially an optimal one, is generated (one should provide any algorithm of their preference). Then, all vertices of G with the same indices as those in the found independent set IS are coloured with the first available colour from K, whose index is given by the variable k. Next, all vertices of IS (and the related incident edges) are removed from H, and then the reference of the first available colour is updated.

The Greedy algorithm 400 was solved as described in Algorithm 1. To do this, equations [11], [12], [13] were solved exactly with a classic ILP solver to find the related MIS for each pricing iteration. All vertices' weights were set to '1'. This may be referred to as the 'classic greedy algorithm'.

A Quantum Greedy algorithm was also solved as described in Algorithm 1. in this alternative solving, for each pricing, the related quantum adiabatic algorithm was used to find the related MIS, where all vertex weights were set to 1. Furthermore, the sum of the weights related to the generated independent set were greater than 0 (instead of 1 as in the column generation).

A Classic Column Generation (CCG) was also used to solve the same minimum vertex colouring problem wherein (R-)RMPs and PSPs were solved classically by a classic LP/ILP solver.

Lastly, an example method of the present application was used to solve the minimum vertex colouring problem. For the discussion of this example, the method may be referred to as the Quantum Column Generation (QCG). The RMPs were solved by a classic ILP solver, but each PSP was solved by the quantum adiabatic algorithm as previously described. GLPK was used as the classical LP/ILP solver.

Six 6 types of graphs were generated. These were UD and non-UD graphs with density probability set to 20% (hereafter referred to as (non-)UD sparse graphs), 50% (hereafter referred to as (non-)UD medium-size graphs7), and 80% (hereafter referred to as (non-)UD dense graphs). For each graph class, 30 instances were generated and solved. The size (respective order) of a graph in this discussion is the number of edges (respective vertices) it contains. It should be noted that, by fixing the connectivity probability, the chances of having a UD Erdos-Renyi graph quickly approaches zero as the number of the nodes increases. For this reason, this graph class (i.e., Erdos-Renyi graphs) may be hereafter referred to as non-UD graphs.

The optimality gap was used to qualify the solution given by each approach. Let colouring(G) be the number of colour used by the algorithm to solve a given instance G, then the gap is calculated as [colouring(G) - X(G)] / [X(G)]. The optimal solution X(G) for any graph instance G, for this example, was found by solving exactly the related compact formulation. The aforesaid related compact formulation may be provided in I.-C. Ternier. "Exact algorithms for the Vertex Coloring Problem and its generalisations". PhD thesis, Universite Paris sciences et lettres, 2017; the entire contents of which are incorporated herein.

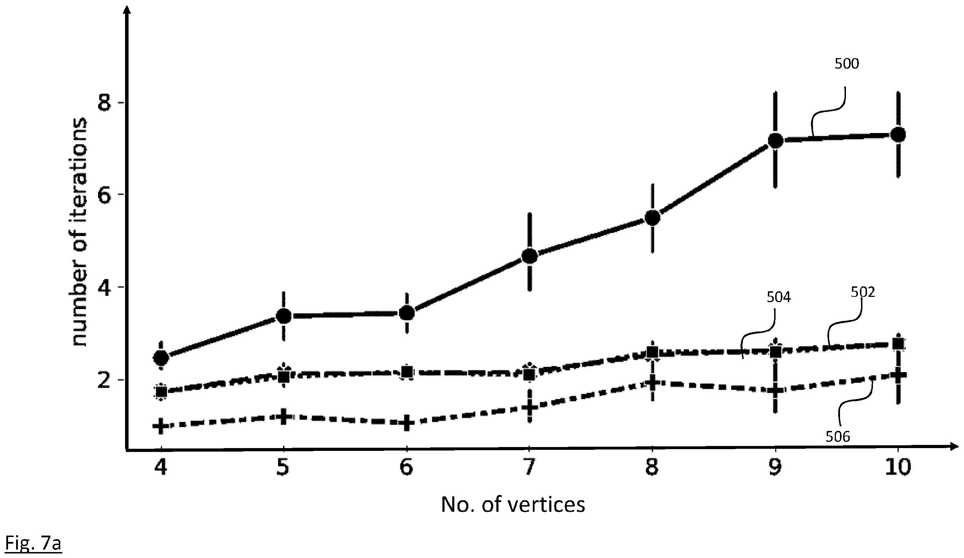

Figures 7a-7f show graphs of the number of iterations taken for the number of vertices for each of the different solving methods listed above in this comparison. In each of the result-graphs in figure 7a-7f: the results for the Classic Column Generation approach are labelled '500'; the results for the Classic greedy approach are labelled '502'; the results for the Quantum greedy approach are labelled '504'; the results for the QCG approach, associated with the method of the present application, are labelled '506'.

Figure 7a is for the non-unit disk graph with density probability of 0.2.

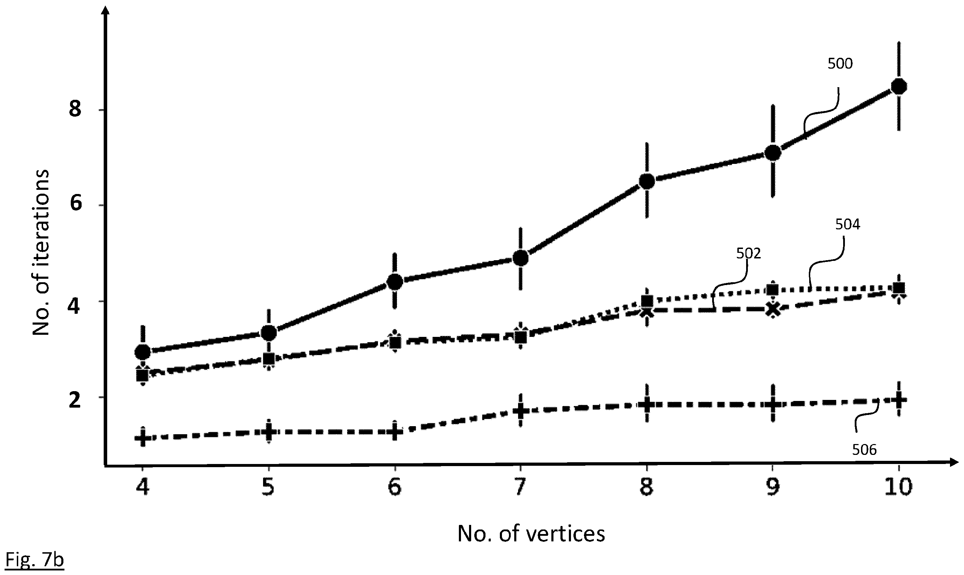

Figure 7b is for the non-unit disk graph with density probability of 0.5.

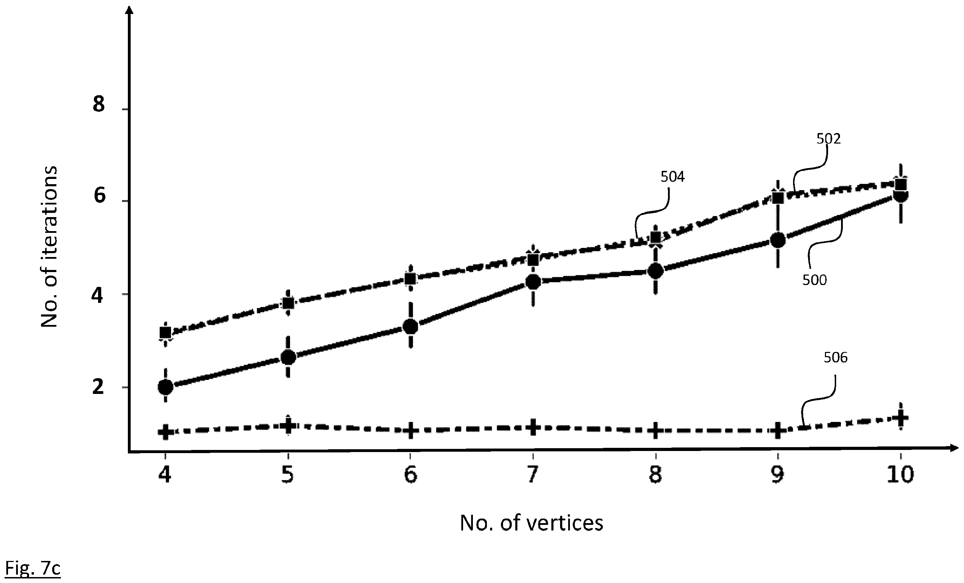

Figure 7c is for the non-unit disk graph with density probability of 0.8.

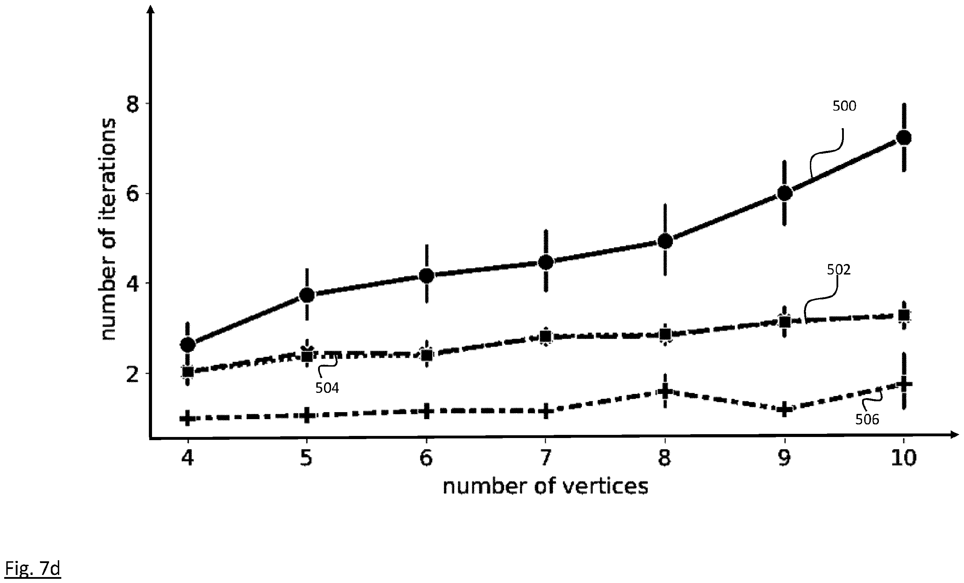

Figure 7d is for the unit disk graph with density probability of 0.2.

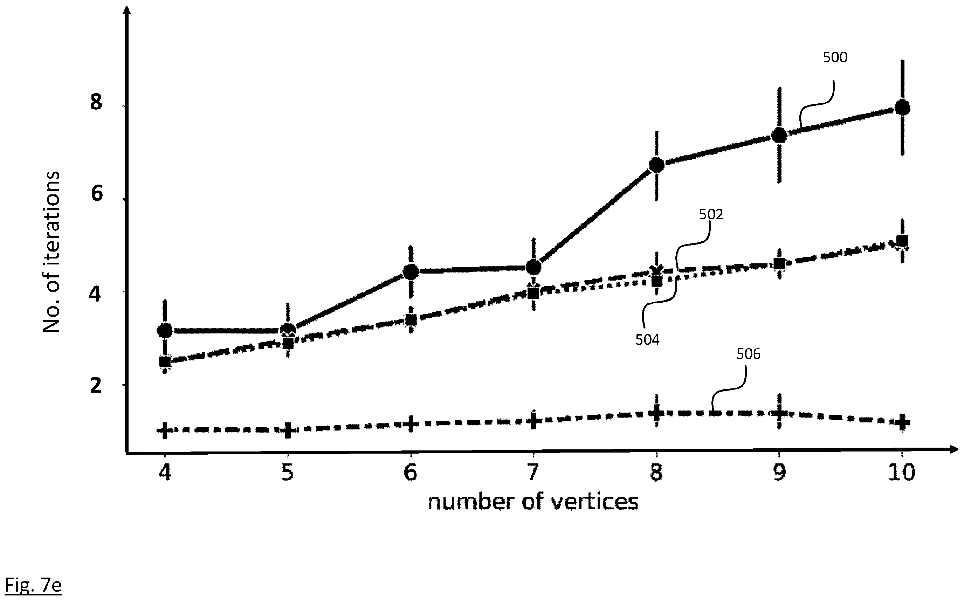

Figure 7e is for the unit disk graph with density probability of 0.5.

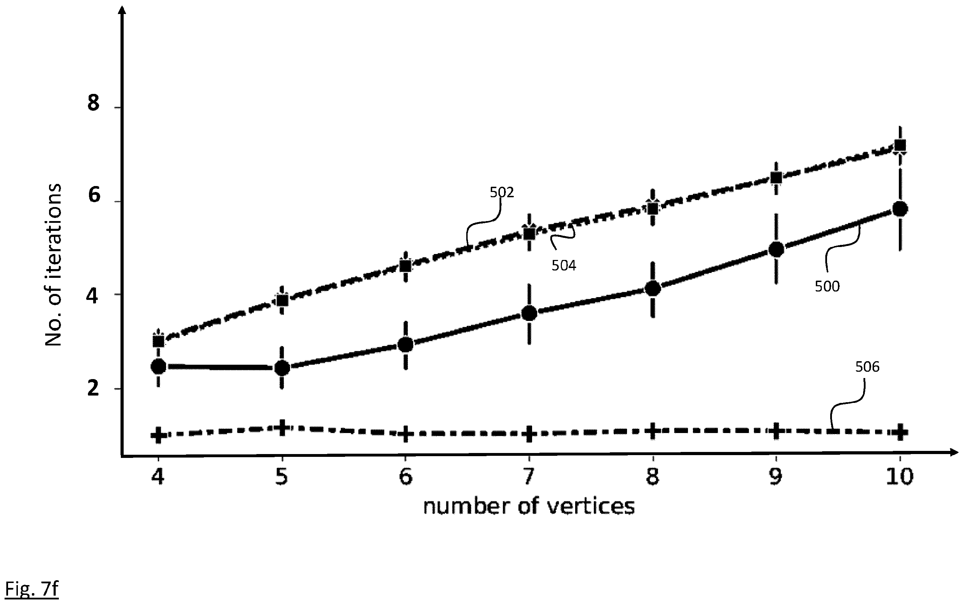

Figure 7f is for the unit disk graph with density probability of 0.8.

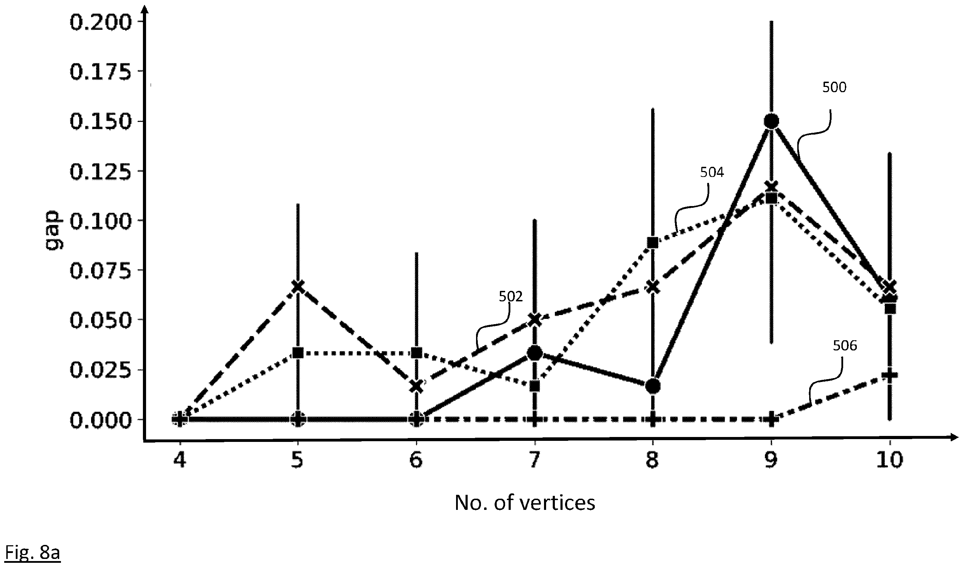

Figures 8a-8f show graphs of the gap for the number of vertices for each of the different solving methods listed above in this comparison. In each of the result-graphs in figure 8a-8f: the results for the Classic Column Generation approach are labelled '500'; the results for the Classic greedy approach are labelled '502'; the results for the Quantum greedy approach are labelled '504'; the results for the QCG approach, associated with the method of the present application, are labelled '506'. The 'gap' figures show the average gap/iterations over 30 graphs of the same class (size/order/(n)UD) wherein the vertical bars represent the standard deviation. The 'gaps' were calculated as following: (S - O)/O, where S is the cost of the solution found by a given approach and O is the cost of the optimal solution. O can be found by a classical solver or with a brute-force approach.

Figure 8a is for the non-unit disk graph with density probability of 0.2.

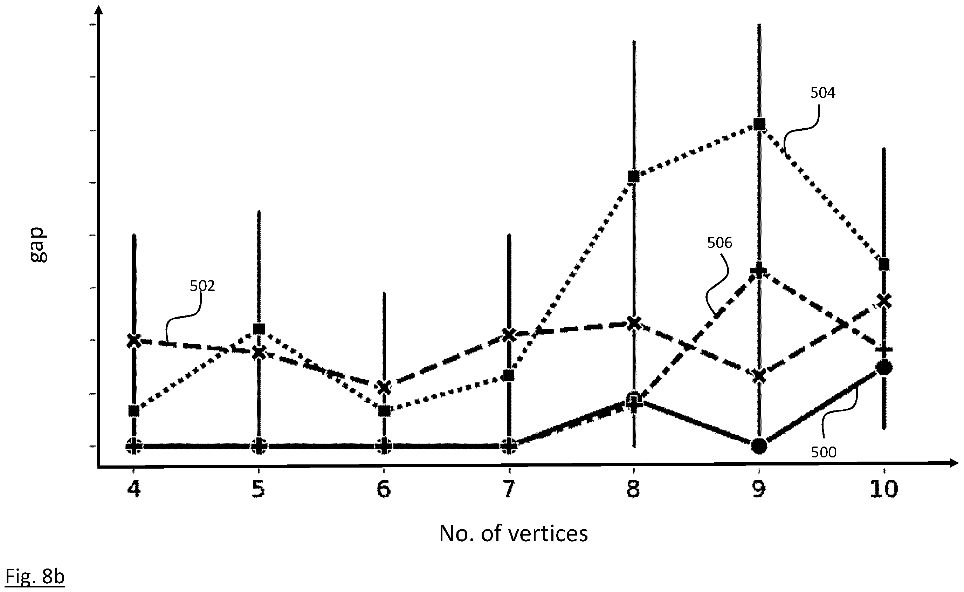

Figure 8b is for the non-unit disk graph with density probability of 0.5.

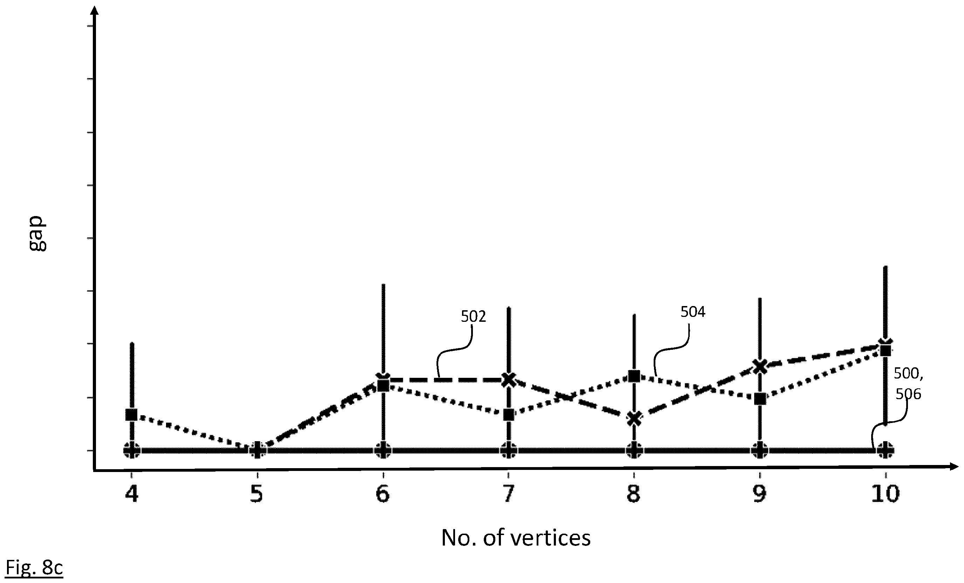

Figure 8c is for the non-unit disk graph with density probability of 0.8.

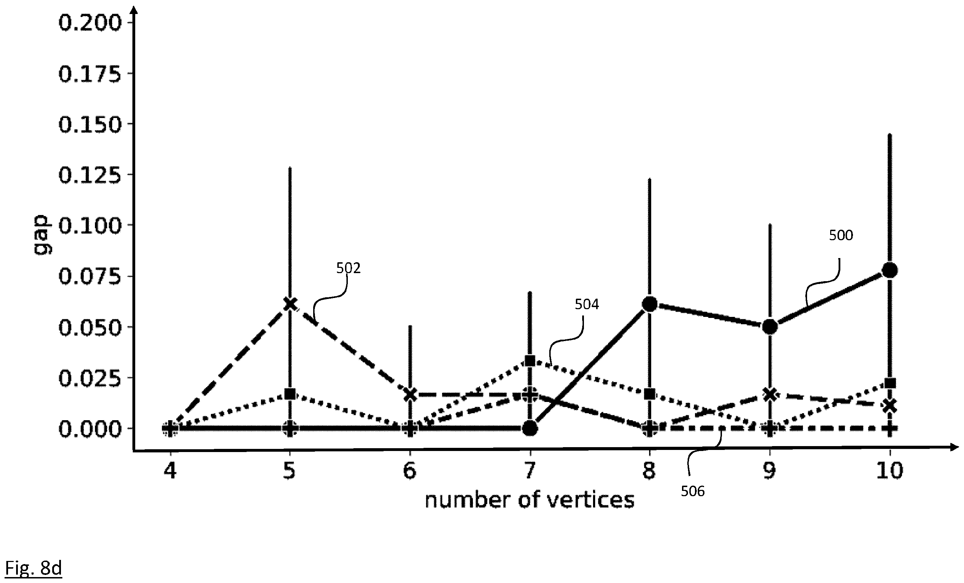

Figure 8d is for the unit disk graph with density probability of 0.2.

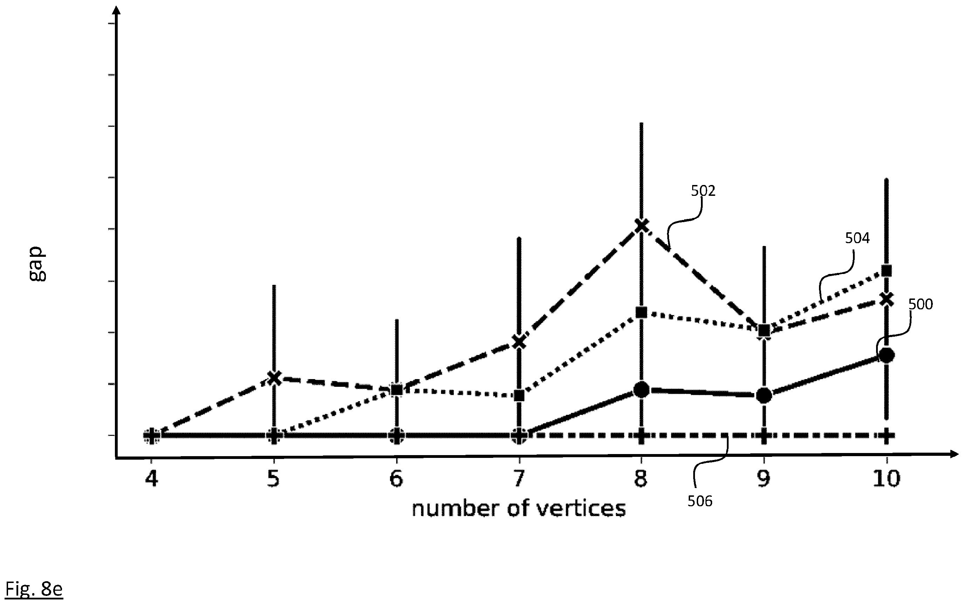

Figure 8e is for the unit disk graph with density probability of 0.5.

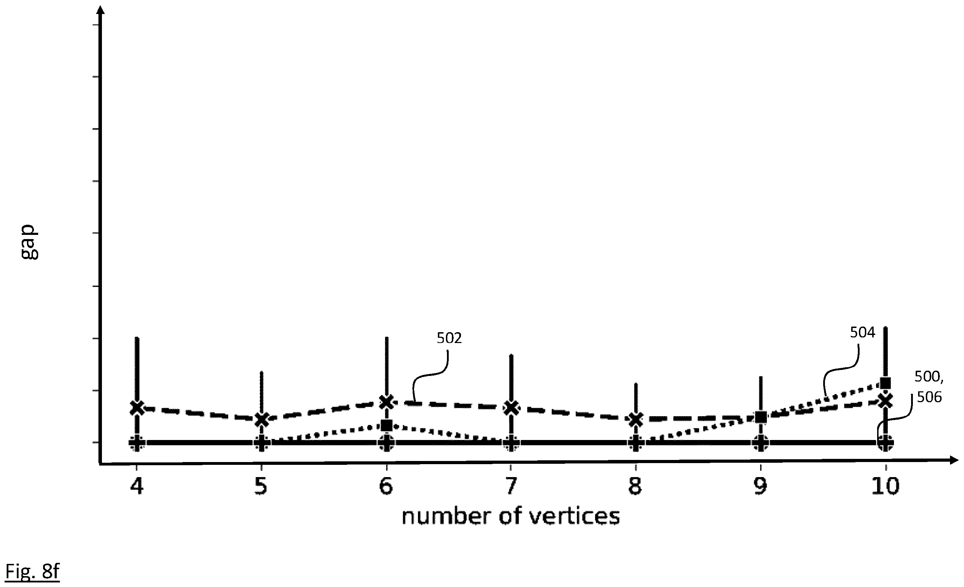

Figure 8f is for the unit disk graph with density probability of 0.8.

The results in figures 7a-f and 8a-f clearly shows that the number of iterations required to solve the graphs is always smaller for the present method (lines 506 in the graphs), than the other methods.

The speed of the solve for the present method may be up to 8x faster (in terms of number of iterations) than the Classic CG approach and around 7x faster than the classic and quantum greedy algorithms). The results also show no impact from the graph class, therefore it can therefore the results show that the instance of the present method in the comparison test can efficiently solve the Minimum Edge Colouring Problem too if a transformation is made between the min. vertex colouring problem to minimum edge colouring problem. Compared to QUBO formulations of solving the same problem, the present method also uses fewer qubits, i.e., $|V|$ qubits, instead of $|V|^2 + |V|$ as with the QUBO formulation.

The above results demonstrate advantages of using the present method for a particular problem, however it is to be understood that similar advantages would be gained for other problems.

General example of a neutral atom quantum computer system set-up

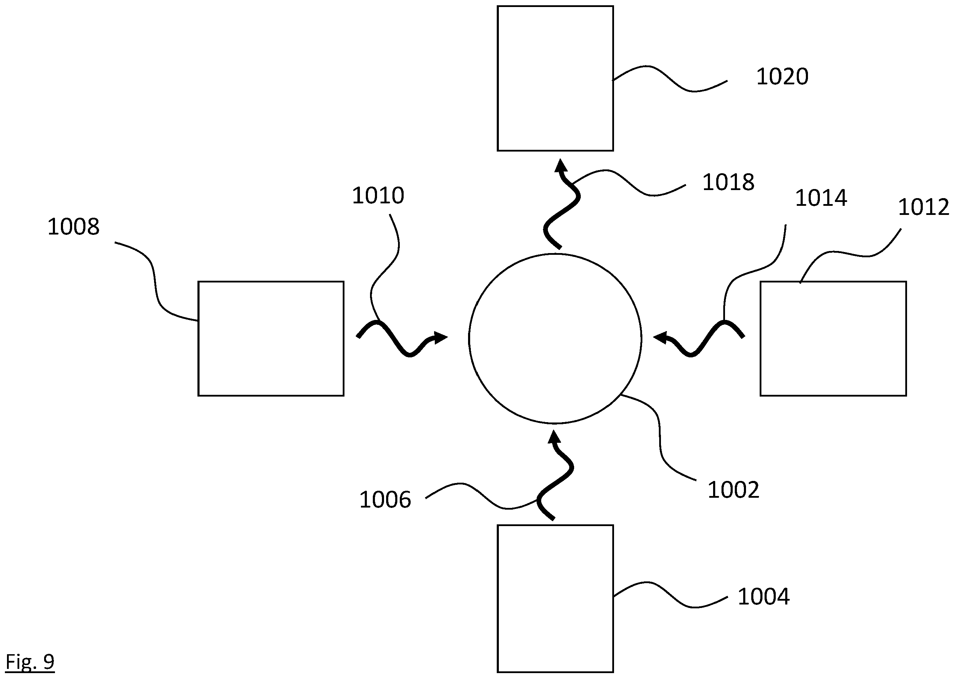

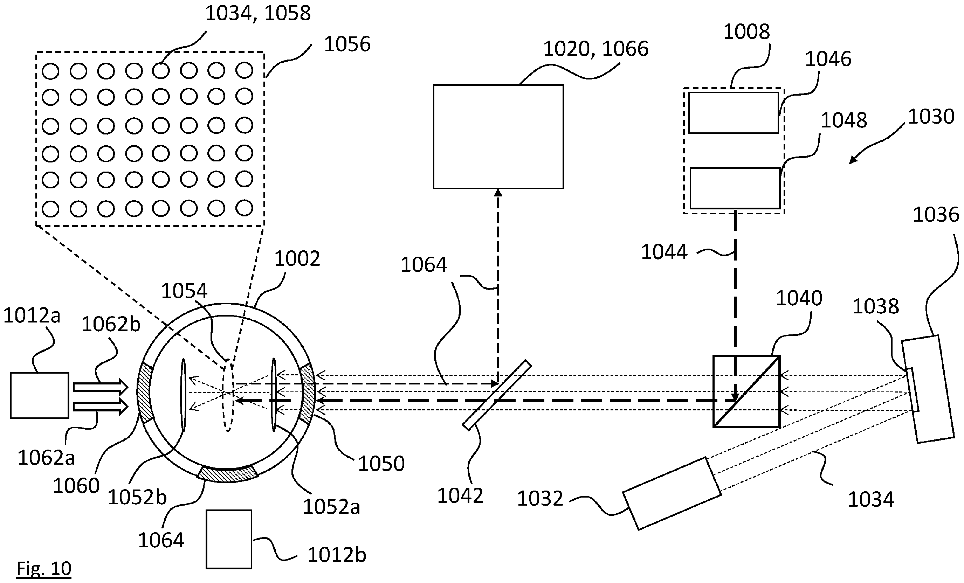

There now follows a discussion of an example analogue quantum computing system for use with the method and system presented herein. As discussed above, the method may in principle be applied to other analogue quantum computers such as ion trapped QCs. The method may be enacted by an apparatus, a system of components, a device or a plurality of devices. Figure 9 shows a general schematic of a set-up for neutral atom quantum computer. The set-up may be referred to as a 'quantum computing system'. Figure 10 shows a further, more detailed, example of such a set-up.

As a schematic, the positions and configurations of the elements in figure 9 are not supposed to imply any real-world size, positioning or configuration of features, but merely to illustrate an example of the key functioning components of a neutral atom quantum computing system that can be used with the methods and system discussed herein.

In figure 9, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 9 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 9 shows the holding apparatus 1004 being external to the chamber 1002, however, the holding apparatus 1004 may form part of the chamber 1002 or be inside the chamber 1002. Although only a single holding apparatus 1004 is shown in figure 9, it is envisaged that more than one holding apparatus 1004 may be used.

An atom positioner 1008 is also shown in figure 9. The atom positioner 1008 is an apparatus that is able to controllably move one or more held atoms from one spatial position to another spatial position. For example, the atom positioner 1008 may move an atom trapped in one of the optical trap sites to another different trap site. Figure 9 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 9 we assume that optical signals 1010 are used such as, but not limited to, optical tweezers. Although only a single atom positioner 1008 is shown in figure 9, it is envisaged that more than one atom positioners 1008 may be used.

An atomic state actuator 1012 is also shown in figure 9. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 9, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 9 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 9. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 9 shows the detector 1020 being external to the chamber 1002, however, the detector 20 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 1004 emits signals into the chamber 1002 to create a plurality of optical traps.

B) Some of the ensemble of atoms in the chamber 1002 are automatically trapped by the plurality of traps.

C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.

D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.

E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 9, including but not limited to: the atoms used; the atomic state actuator 1012; the atom positioner 1008; the holding apparatus 1004; the detector 1020; the general operation; may be used with any other example presented herein.

Detailed example of a neutral atom quantum computer system set-up

Figure 10 shows a specific, non-limiting, example of a neutral atom quantum computing/system setup 30 that may be used with the method or system presented herein. The chamber 1002 is a vacuum chamber and a dilute atomic vapour is formed inside the chamber 1002. The chamber 1002 is an ultra-high vacuum system operating at room temperature, however other environmental temperatures may be formed inside the chamber 1002. Figure 10 is a more detailed example of figure 9 wherein like references in the figures represent like components.

This set-up may be adapted according to any teaching herein including, but not limited to, the features described above for figure 9. The set-up in figure 10 may also be referred to as a 'quantum processor' or 'quantum system'. It is to be understood that the example in figure 10 is just one example of a set-up for a quantum processor and provides a 2D array of optical trapping sites, however other set-ups may be used, for example to implement a 3D array of trapping sites by including a plurality of the below-mentioned components and/or different component locations and/or configurations. The example in figure 10 may also be adapted by removing components, adding components, combining components and re-positioning components.

In figure 10 a laser system 1032, comprising a laser and beam-expanding optics, outputs a cross-sectionally-wide collimated laser beam 1034 towards a spatial light modulator (SLM) 1036. The SLM 1036 and the laser system 1032 being equivalent to the holding apparatus 1004 in figure 10. The SLM 1036 comprises a 2D periodic array of controllable deformable mirrors 1038 which receive the collimated beam 1034 and selectively reflect portions of the beam 1034 towards a polarising beam splitter (PBS) 1040. The SLM 1036 outputs an adjustable phase pattern on the light 1034, that in turn gets converted into an intensity pattern 1058 by first lens 1052a, as described later. The polarisation of the reflected portions of the beam 1034 pass through the PBS 1040 and propagate towards a dichroic mirror 1042. It is understood that the laser system 1032 may have other components such as a polarisation rotator (not shown) for controllably adjusting the polarisation of output light 1034 incident upon the SLM 1036, so that the polarisation of light 1034 is aligned to the transmission axis of the PBS 1040.

The PBS 1040 also receives electromagnetic signals 1044 from an atom positioner 1008 comprising a laser 1046 and a 2D acousto-optic laser beam deflector 1048 that receives laser light from the laser 1046 and controls the direction of the laser light into the PBS 1040. In turn, this allows the deflector 1048 to use the laser light 1044 as an optical tweezer or an array of optical tweezers. The light 1044 output from the atom positioner 1008 is reflected by the PBS 1040 such that it is output from the PBS 1040 along a substantially similar path to the light 1034 output from the PBS 1040 that originates from the laser system 1032. The light beams 1034 and 1044 may at least partially overlap in space when output from the PBS 1040. The light 1044 originating from positioner 1008 that is reflected and output by the PBS 1040 is incident upon the dichroic mirror 1042.

It is noted that the position and direction of light rays in figure 10, such as beams 1034 and 1040, are shown spatially separate to each other, however this is merely for purposes of visual clarity in the figure and may not represent the beam positions in practice.

Both the light 1044 and 1034 output from the PBS 1040 pass through the dichroic mirror 1042 and are incident upon window 1050 of the chamber 1002. The window 1050 may be one of a plurality of windows in the chamber 1002 that are at least partially transparent to the wavelengths of the light that are incident upon them that are generated by the electromagnetic sources of the system 1030. The window 1050 forms part of the body of the chamber 1002 and is sealed with respect to the walls of the chamber such that the chamber 1002 holds a vacuum environment within it. Other components may be associated with the vacuum chamber 1002 by either being inside the chamber 1002, integrated with the chamber 1002 or immediately surrounding the chamber 1002 insofar that the components may input stimuli into the chamber 1002, such as electromagnetic fields or magnetic fields. One or more magnetic coils (not shown) may be included about the chamber 1002 to provide a spatially-varying magnetic field that, with the laser light 1034, acts to provide a magneto-optical trap (MOT). The laser light 1034 may have a wavelength configured to cool the atoms via the mechanism of doppler cooling. The light 1034 may be split and/or reflected by other optical components (not shown) to provide a plurality of beams propagating along different directions that intersect the trapping area 1054. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 1034, the magneto-optical trap. The quantum system 1030 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 1002 are a pair of convex lenses 1052a, 1052b. The first lens 1052a is positioned to receive light beams 1034 and 1044 passing through the window 1050 and focus them both onto a trapping area 1054 of minimum beam waist (i.e., at the focal plane of the lens 1052a). The second lens 1052b is located on the opposite side of the focal plane and captures light exiting the trapping area 1054 and focusses or collimates the light into a plurality of light beams that may be incident upon: a beam dump inside the chamber 1002 (not shown) or another chamber window 1060 that allows the light to escape the chamber 1002.

An expanded view 1056 of the focal plane in area 1054 is also shown in figure 10 wherein an array of optical trapping sites 1058 are shown that are created from the mirrors 1038 of the SLM 1036 reflecting portions of the light 1034.

Figure 10 further shows two atomic state actuators 1012a/b that take the form of lasers that output light for manipulating the states of the atoms trapped at the trapping sites 1058. In figure 10, actuator 1012a is a system comprising two (or more) lasers, each laser may output light at a different wavelength 1062a/b. Different wavelengths may match different atomic transitions of the atomic system (or 'ensemble') held in the chamber 1002, alternatively a photon from each of the different wavelengths 1062a/b may be used in two photon absorption process. Alternatively, the two atomic state actuators 1012a/b may output the same wavelength. In the alternative, a single atomic state actuator 1012a may be used.

The light from the actuator 1012a is incident upon a chamber window 1060, through which the light travels and is incident upon the second lens 1052b. The lens 1052b, in turn focusses the light onto the atoms in the trapping sites 1058. A further atomic state actuator 1012b is shown positioned, about the plan view of the chamber 1002, orthogonally to the first actuator 1012a. This second actuator 1012b may be substantially similar to the first actuator 1012a where a further chamber window 1064 allows light output from the second actuator 1012b into the chamber 1002. The second actuator 1012b may be used to help address and manipulate atoms, particularly when the system provides a 3D array of optical traps. The optical components for focussing light inside the chamber 1002 from the second actuator is not shown in figure 10.

It is to be understood that figure 10 and its accompanying description is an example of a setup for a neutral atom quantum computer. The atomic state actuators 1012 may be positioned in different locations, including inside or outside the chamber 1002 or part of the chamber 1002. There may also be one or a plurality of different actuators 1012. The actuators 1012 may be integrated or otherwise co-located with other electromagnetic sources such as the laser 1046 or laser system 1032. It is also to be understood that the quantum system 1030 may include other optical or electronic components and/or configurations to allow the neutral atoms to be addressed by the different electromagnetic sources.

Light, for example fluorescence, emitted by the trapped atoms may be output from the chamber 1002 through any of the windows 1050, 1064, 1060. In figure 10, the light 1064 emitted from the trapped atoms travelling out of the window 1050 is, prior to exiting window 1050, collimated by the first lens 1052a. This light 1064, once exited window 1050, is incident upon the dichroic mirror 1042. The dichroic mirror 1042 reflects the emitted light 1064 towards a camera 1066 (which is equivalent to the detector 1020 in figure 9). The camera 1066 may be an electron-multiplying charge-coupled-device (EMCCD) camera. The dichroic mirror 1042 may have an edge or pass-band characteristic filter response that substantially reflects emitted light 1064 but substantially transmits light 1034 and 1040.

Figure 10 is shown as a collection, or system, of separate components, including bulk-optic devices wherein light is propagated between components using free-space propagation. It should be appreciated that other versions of the quantum system set-up 1030 may be implemented using fibre-optics or integrated optic components.

The components of the quantum system 1030, such as, but not limited to, laser system 1032, atom positioner 1008, camera 1066, actuators 1012a/b may be controlled by a classical computer system running one or more pieces of software and/or providing manual user input through an interface to control these components. Details of classical computer system features are provided elsewhere herein.

Example of operating the quantum processor

There now follows an example of operating a quantum processor such as, but not limited to the set-up as shown in figure 10. The atoms in this example are rubidium atoms, however other atoms may be used.

The atoms in the chamber 1002 are initially not in an arrangement suitable for performing quantum computing operations. To get the atoms in an arrangement for quantum processing, a 3D MOT is initiated, as described above, wherein a cold ensemble of $10^6$ atoms with a $1mm^3$ volume is prepared inside the trapping area 1054. This array of atoms may be referred to as a 'register' and steps of locating atoms in the trapping sites may be referred to as 'register loading'. The optical tweezers using light 1044 isolate individual atoms in the ensemble. The trapping volume of a tweezer may be between $1\text{-}10\mu m^3$ or generally in the order of a few $\mu m^3$. Such a volume may trap at most one atom at a time. The number and arrangement of tweezers may be in any 1D, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub register atom arrangements are also possible.

To determine where the atoms are initially held in the register, the atoms are imaged by collecting their fluorescence on the camera 1066. From these one or more images a program run on a classical computer system may be used to determine the position of the initially occupied sites 1058. Additionally, or alternatively a user may provide input to determine such positions. When a classical computer is used, an algorithm may be used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 1048.

Optionally a further image may be acquired in a similar way as described above to check whether the sub-register formed has atoms in the predetermined positions. Furthermore, when any quantum processing is complete, the sub-register may be read out in a similar way using the camera 1066. The above process of setting up a sub register is optional; the use of the atoms in the register may be performed, in principle, without the need for setting up a sub register.

Rydberg entanglement

We now discuss, for neutral atom quantum computers the inter-atom interactions, hence entanglement between the qubits.

It is appreciated that in examples described elsewhere herein the quantum states of a neutral atom quantum computer can be represented by two Rydberg states of an atom, however the following general discussion of Rydberg states and entanglement is provided for context, particular where the method and system are implemented in a quantum gate-form as discussed elsewhere herein, wherein the Qubit would be encoded in two distinct hyperfine states of the atoms. The Rydberg level would then be used in a transient manner during entangling gates.

Neutral atoms in their electronic ground state can only interact significantly via contact physical collisions. Single atoms are typically separated by a few micrometres in the register and therefore do not naturally 'feel' each other, therefore they do not normally interact. EM pulses imparted on the qubits may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 1012a/b used to impart light at the wavelength needed for the Rydberg transition may be referred to as the Rydberg laser. The Rydberg laser and its output light may be referred to herein as the 'Rydberg channel'.

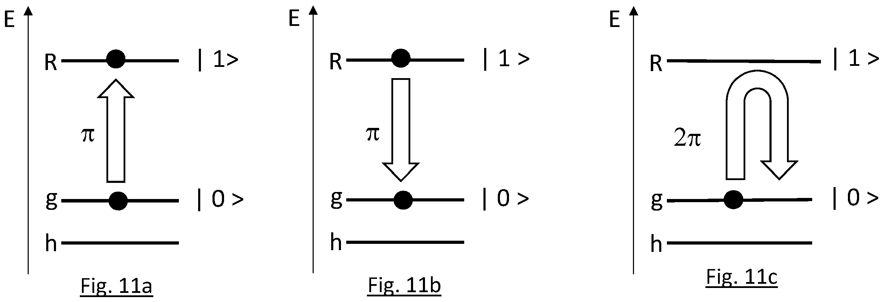

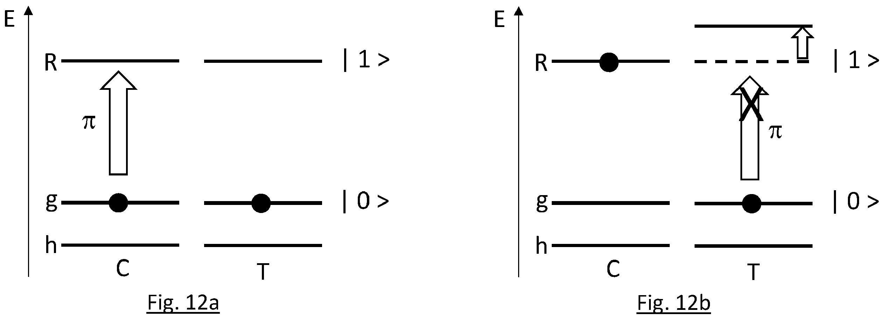

Figures 11a-11c schematically show three levels of the atomic system of the rubidium atoms used herein wherein: the energy levels 'g' and 'h' denote the hyperfine states wherein the state 'g' represents the 10 > qubit states respectively, whilst 'R' represents the Rydberg state which is the | 1 > qubit state of the atomic system. The examples in figures 11a-11c and 12a, 12b are used for illustrative purposes to explain the Rydberg blockading effect using different single pulses to transition the atom from a ground to a Rydberg state, however in an analogue system the EM signal inducing a blockade may be a series of EM pulses and/or a continuous EM signal spanning the duration of the quantum calculation before the qubit measurements are made.

The label of '$\pi$' in figures 11a and 11b is shown when a single transition is made between the | 0 > and | 1 > state indicating that a $\pi$ change in $\theta$ has been imparted into the atomic system because of the overall transition. Similarly, when a laser field of sufficient duration and amplitude has been imparted onto the atom to transition it from the 'g' energy level up to the R energy level and then back to the g energy level (within the same control field input), this is labelled as '$2\pi$' indicating that a $2\pi$ change in $\theta$ (i.e., a full Bloch sphere rotation) has been imparted into the atomic system because of the overall transition. It is understood that the input control fields causing these transitions in figures 11a-c have a wavelength resonant with the |0> to |1 > transition. Figure 11a shows the atomic transition from the g level to the R level with a $\pi$-pulse. Figure 11b shows the atomic transition from the R level to the g level with a $\pi$-pulse. Figure 11c shows the atomic transition from the g level to the R level and back to the g level again with a $2\pi$-pulse.

An example of the Rydberg blockade is the situation where two neighbouring atoms are both in the 10 > state, i.e., both at the g energy level as shown in figure 12a. In figure 12a, the above energy levels are shown for two identical rubidium atoms wherein, for this explanation, the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a $\pi$-pulse as

shown in figure 12a. At a time after the C atom has transitioned to the R state, the equivalent R state energy level for the T atom is raised above its normal energy level due to the effect of the C atom being in a higher energy state. If a $\pi$-pulse is then introduced to the T atom whilst this 'blockade' is in effect, as shown in figure 12b, the $\pi$-pulse will not transition the T atom from the g energy level to the R energy level due to the frequency of the laser being detuned from the frequency difference between the Rydberg-energy level and the g-energy level. As such, the T atom remain in the g state. The Rydberg blockade may therefore be used to enable the state of one qubit (C atom) to affect the state of another qubit (T atom). The cross over the arrow in figure 12b, indicates that the transition did not occur.

Rydberg atoms strongly interact in a way that can be mapped into spin Hamiltonians. Depending on the Rydberg states that are involved in the process, the spins experience different types of interactions that translate into different Hamiltonians. It could be, but is not limited to, dipole-dipole or Van der Waals interaction. When the 10 > state is one of the ground states of and the |1 > is a Rydberg state, this may map to the Ising model which uses discrete variables representing magnetic dipole moments of atomic "spins" that can be in one of two states. The Hamiltonian of an atomic system using ground-Rydberg states for the different spins may be represented by equation 25.

$$\mathcal{H}(t) = \frac{\hbar}{2}\Omega(t)\sum_j \sigma_j^x - \hbar\delta(t)\sum_j n_j + \sum_{i\neq j}\frac{C_6}{r_{ij}^6}n_i n_j$$

[Equ. 25]

In this equation, the Rydberg state occupancy is: $n_j = (1 + \sigma_j^z)/2$ wherein $\sigma^x$ and $\sigma^z$ are the Pauli matrices of the spin 'j'. The Rabi frequency is $\Omega(t)$ and can be changed by changing the intensity-time profile of the input EM radiation. The detuning is $\delta(t)$ and can be changed by changing the frequency (i.e., wavelength)-time profile of the input EM radiation.

The first two terms are induced by the laser that couples the qubit states and relate to an effective magnetic field, with transverse B component proportional to $\Omega(t)$ and the longitudinal B component proportional to $-\delta(t)$. These two terms describe how individual spins would precess in the presence of an external magnetic field.

The third term in equation 25 relates to the interactions between individual spins. More specifically, it corresponds to an energy penalty that two qubits experience if they are both in the Rydberg states at the same time. The coupling between two spins i and j is of van der Waals type and depends on the inverse of the distance between them $r_{ij}$ to the power of 6, and on a coefficient C6 relative to the Rydberg state.

The system may use other spin states associated with Rydberg states. Instead of using a ground and Rydberg state, the system may use two Rydberg states that are dipole coupled. These states may be |nS > and |nP >. Such a system may be described by a different Hamiltonian, namely the XY Hamiltonian represented by Equation 26.

$$\mathcal{H}(t) = \frac{\hbar}{2}\Omega(t)\sum_j \sigma_j^x - \frac{\hbar}{2}\delta(t)\sum_j \sigma_j^z + 2\sum_{i\neq j}\frac{C_3}{r_{ij}^3}\left(\sigma_i^x\sigma_j^x + \sigma_i^y\sigma_j^y\right)$$

[Equ. 26]

The first two terms in equation 26 are typically induced by a microwave field.

The third term in equation 26 corresponds to a coherent exchange between the spin states, transforming the pair state |01 > to |1 0 >.

Other Hamiltonians may be used such as the XXZ model. Examples of a NAQC using Rydberg atoms in optical offer a favourable quality factor Q ~ $10^2$, given by the ratio of coherent evolution rate over the decoherence rate.

<u>Optional examples of features of a classical computer/computing system for use with the method</u>

Some portions of the above description present the features of the method/system in terms of operations on information performed by a classical computer. These operations, while described functionally or logically, are understood to be implemented by computer programs and/or via dedicated hardware. Furthermore, the reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and may not be mental steps performed by a human. Similarly, all of the types of data described and claimed may be stored in a computer readable storage medium operated by a computer system and are not simply disembodied abstract ideas.

The method/system may relate to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g., flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

**Claims**

1. A method of using a quantum-based system for finding a group of one or more solutions to a version of a first problem; the quantum-based system associated with a plurality of qubits; the said one or more solutions being solutions that obey one or more constraints associated with the first problem;
   the method comprising:

   I) determining a set of parameters, for a version of a second problem, for running the quantum-based system; the second problem being associated with the first problem; the set of parameters enabling the quantum-based system to output a plurality of solutions to the version of the second problem wherein each of the plurality of solutions is associated with:

   a common set of quantum states of the quantum-based system;
   a different value of at least one of the said variables of the version of the second problem;

   II) running the quantum-based system, using at least the determined set of parameters, to identify a set of one or more of the qubits; the identified qubits corresponding to at least one of the solutions to the version of the second problem;
   III) determining, whether the said at least one solution to the version of the second problem can be a new variable for the version of the first problem;
and either:
IV) if the at least one solution to the version of the second problem can be a new variable; using the at least one solution to the version of the second problem as a new variable for the version of the first problem, for finding the group of one or more solutions to the version of the first problem;
or,
V) if the solution cannot be a new variable; then either:

> a) outputting no solution to the version of the first problem; or,
> b) using a previously determined solution to a previous version of the first problem.

2. A method as claimed in claim 1 wherein:

> the version of the first problem comprises at initial set of, least one, previously determined variables; and,
> the new variable for the first problem is a different variable to any of the variables in the initial set.

3. A method as claimed in claim 2 wherein:

> the initial set of previously determined variables corresponds to at least one first version of the first problem; and,
> the step of using the at least one solution to the second problem as a new variable for the first problem, comprises determining a second version of the first problem; the first version of the first problem being different to the second version of the first problem.

4. A method as claimed in any preceding claim wherein:

> the version of the second problem is a first version of the second problem;
> the at least one solution to the first version of the second problem is a first solution;
> the set of one or more of the qubits is a first set of one or more of the qubits;
> the new variable is a first new variable;

the method further comprising:

> I) re-running the quantum-based system using at least the same determined set of parameters, to identify a second set of one or more of the qubits that is different to the first set of one or more qubits; the identified qubits of the second set corresponding to a second solution to the first version of the second problem;
> II) determining, using a cost function, whether the said second solution the second problem can be a second new variable for the first problem; the second new variable to the first problem being different to the first new variable to the first problem;
> III) using the first and second new variables in the same version of the first problem, for finding the group of one or more solutions to the first problem.

5. A method as claimed in claim 4 wherein:

> the running of the quantum-based system is a first running; and,
> the re-running the quantum-based system is a second running;
> the first running and second running executing the same quantum-based computation such that the common set of quantum states for the first running are identical to the common set of quantum states for the second running.

6. A method as claimed in any preceding claim, wherein:

> the version of the second problem is a first version of the second problem;
> the at least one solution to the first version of the second problem is determined to be a new variable;
> the set of parameters for the first version of the second problem is a first set of parameters;
> the method further comprising:

> > using the found group of one or more solutions to the version of the first problem to generate one or more weightings for the variables of a second version of the second problem;

using the one or more generated weightings to determine a second set of parameters for the second version of the second problem;

running the quantum-based system, using at least the determined second set of parameters, to identify a further set of one or more of the qubits; the identified qubits corresponding to at least one of the solutions to the second version of the second problem.

7. A method as claimed in claim 6 further comprising:

the version of the first problem is a first version;

determining, whether the said at least one solution to the second version of the second problem can be a further new variable for a second version of the first problem;

and either:

IV) if the at least one solution to the second version of the second problem can be a new variable; using the at least one solution to the second version of the second problem as a further new variable for the second version of the first problem, for finding the group of one or more solutions to the second version of the first problem;

or,

V) if the at least one solution to the second version of the second problem cannot be a new variable; then using a previously determined solution to the first version of the first problem.

8. The method as claimed in any preceding claim wherein:

I) the first problem is a graph problem, the graph comprising a plurality of vertices and at least one edge;

II) the set of parameters being associated with least one of:

the plurality of vertices;

the at least one edge.

9. The method as claimed in claim 8 wherein:

I) the graph defines a first plurality of independent sets wherein each independent set comprises at least one or more of the vertices or edges;

II) the step of:

using the at least one solution to the version of the second problem as a new variable for the version of the first problem, for finding the group of one or more solutions to the version of the first problem;

comprises:

finding a group of one or more independent sets from a second plurality of independent sets; the first plurality of independent sets comprising the independent sets of the second plurality of independent sets; the second plurality of independent sets comprising at least the independent set associated with the identified solution.

10. A method as claimed in any preceding claim wherein:

the quantum-based system comprises a quantum computer; and,

the first set of parameters comprises at least one or more parameters for:

a) configuring the quantum computer ready for use in outputting a solution; and/or,

b) operating the quantum computer, after being ready for use.

11. A method as claimed in claim 1 wherein prior to the determination of the new first variable, the first problem comprises no variables.

12. A method as claimed in any preceding claim wherein the quantum-based system comprises a neutral atom quantum computer.

13. A method as claimed in claim 12 wherein the set of parameters comprises data associated with any one or more of:

i) the number of atoms used in the quantum computation;
ii) the relative position of the atoms used in the quantum computation;
iii) at least one of the characteristics of an electromagnetic signal used to control the interaction of the atoms used in the quantum computation.

14. A method as claimed in claim 13 wherein at least one or more of:

i) the number of atoms used in the quantum computation;
ii) the relative position of the atoms used in the quantum computation;
iii) at least one of the characteristics of an electromagnetic signal used to control the interaction of the atoms used in the quantum computation

is different between a first set of parameters for a first version of the second problem and a further set of parameters for a further version of the second problem.

15. A system for finding a group of one or more solutions to a version of a first problem; the said one or more solutions being solutions that obey one or more constraints associated with the first problem; the system comprising a processor configured to:

I) determine a set of parameters, for a version of a second problem, for running on a quantum-based system; the quantum-based system associated with a plurality of qubits; the second problem being associated with the first problem; the set of parameters:

i) associated with at least one or more variables of the version of the second problem:
ii) enabling the quantum-based system to output a plurality of solutions to the version of the second problem wherein each of the plurality of solutions is associated with:

a common set of quantum states of the quantum-based system;
a different value of at least one of the said variables of the version of the second problem;

II) control the running the quantum-based system, using at least the determined set of parameters, to identify a set of one or more of the qubits; the identified qubits corresponding to at least one of the solutions to the version of the second problem;
III) determine, whether the said at least one solution to the version of the second problem can be a new variable for the version of the first problem;
and either:
IV) if the at least one solution to the version of the second problem can be a new variable;
the processor is configured to use the at least one solution to the version of the second problem as a new variable for the version of the first problem, for finding the group of one or more solutions to the version of the first problem;
or,
V) if the solution cannot be a new variable; then either the processor:

a) outputs no solution to the version of the first problem; or,
b) uses a previously determined solution to a previous version of the first problem.

| S2 | S20 | S22 | S40 |
|---|---|---|---|
| Set up and run quantum-computer using $1^{st}$ set of parameters associated with a $1^{st}$ version of $2^{nd}$ problem | Output of $4^{th}$ feasible solution from solving $2^{nd}$ version of $2^{nd}$ problem; determination that $4^{th}$ feasible solution is a $3^{rd}$ new variable | Re-run quantum-computer using the same $2^{nd}$ set of parameters | Use $2^{nd}$ solution to $1^{st}$ problem as final solution for considered problem |

| S4 | S18 | S24 | S38 |
|---|---|---|---|
| Output of $1^{st}$ feasible solution from solving $1^{st}$ version of $2^{nd}$ problem; determination that feasible solution is a $1^{st}$ new variable | Re-run quantum-computer using the same $2^{nd}$ set of parameters | Output of $5^{th}$ feasible solution from solving $2^{nd}$ version of $2^{nd}$ problem; determination that $5^{th}$ feasible solution is a $4^{th}$ new variable | Output of no new feasible solutions from solving $3^{rd}$ version of $2^{nd}$ problem, that correspond to new variables |

| S6 | S16 | S26 | S36 |
|---|---|---|---|
| Re-run quantum-computer using the same $1^{st}$ set of parameters | Output of $3^{rd}$ feasible solution from solving $2^{nd}$ version of $2^{nd}$ problem; determination that $3^{rd}$ feasible solution is a $2^{nd}$ new variable | Determination that no more feasible solutions are found for the $2^{nd}$ version of $2^{nd}$ problem | Re-run quantum-computer using $3^{rd}$ set of parameters |

| S8 | S14 | S28 | S34 |
|---|---|---|---|
| Output of $2^{nd}$ feasible solution from solving $1^{st}$ version of $2^{nd}$ problem; determination that feasible solution is not a new variable | Set up and run quantum-computer using $2^{nd}$ set of parameters | Solving of $2^{nd}$ version of the $1^{st}$ problem using $1^{st}$, $2^{nd}$, $3^{rd}$, $4^{th}$ new variables, yielding a $2^{nd}$ solution to $1^{st}$ problem | Output of $6^{th}$ feasible solution from solving $3^{rd}$ version of $2^{nd}$ problem; determination that $6^{th}$ feasible solution is not a new variable |

| S10 | S12 | S30 | S32 |
|---|---|---|---|
| Solving of $1^{st}$ version of the $1^{st}$ problem using $1^{st}$ new variable, yielding a $1^{st}$ solution to $1^{st}$ problem | Derive $2^{nd}$ set of parameters associated with a $2^{nd}$ version of $2^{nd}$ problem for the quantum computer, from the $1^{st}$ solution to the $1^{st}$ problem | Derive $3^{rd}$ set of parameters associated with a $3^{rd}$ version of $2^{nd}$ problem for the quantum computer, from the $2^{nd}$ solution to the $1^{st}$ problem | Set up and run quantum-computer using $3^{rd}$ set of parameters |

Fig. 1    1

EP 4 379 615 A1

Fig. 2

S104
Generate the Reduced Master Problem (RMP)

S106
Solve the relaxed RMP with the current set S

S108
Get the dual variables

S102
Create the initial set S of possible independent sets (IS) that give a feasible solution

S118
Update S with the new set(s) found by PSP

S110
Generate the Pricing Sub-Problem (PSP) with the dual variables

Problems's instance

Final coloring solution

S116
Solve the 0-1 RMP with the final set S

S114
Stop Criteria ?

S112
Solve the PSP

No

Yes

Fig. 3

100

EP 4 379 615 A1

Fig. 4

Fig. 5

300

**Algorithm 1** Greedy Algorithm

    **Input:** A Graph G = (V,E) and a set K of available colors
    **Output:** Color-vertex assignment

1: $H \leftarrow G$
2: $k \leftarrow 1$            ▷ Keep the index of the first available color.
3: **while** $H$ has vertices **do**
4:      Find a (maximum) independent set $IS$ in $H$
5:      Assign color $k \in K$ to all vertices from $IS$ in $G$
6:      Remove all incident edges related to each vertex in $IS$ from H.
7:      Remove the set $IS$ of vertices from H.
8:      $k = k + 1$            ▷ The index of the first available color is updated.
9: **end while**

400

Fig. 6

EP 4 379 615 A1

Fig.7a

Fig. 7b

Fig. 7c

EP 4 379 615 A1

EP 4 379 615 A1

Fig. 7d

EP 4 379 615 A1

Fig. 7e

No. of iterations

number of vertices

500

502

504

506

Fig. 7f

EP 4 379 615 A1

Fig. 8a

Fig. 8b

Fig. 8c

Fig. 8d

Fig. 8e

Fig. 8f

EP 4 379 615 A1

EP 4 379 615 A1

Fig. 9

Fig. 10

EP 4 379 615 A1

Fig. 11a

Fig. 11b

Fig. 11c

E

R ———————  ——————— | 1 >

π

g ——●——  ——●—— | 0 >

h ———————  ———————

C        T

<u>Fig. 12a</u>

E

R ——●——  - - - - - 🡅 | 1 >

π

g ———————  ——●—— | 0 >

h ———————  ———————

C        T

<u>Fig. 12b</u>

EP 4 379 615 A1

## Algorithm 2 Node-atom remapping

**Input:** A graph $G$, a register $R$ and node weights $W$

**Output:** The reduced register $R$

1: Let $\bar{\mathcal{V}}$ be the set of nodes of $G$ sorted in descending order by the weight given by $W$

2: Remove all nodes whose weights are less than or equal to zero from $\bar{V}$

3: Map node $\bar{\mathcal{V}}.first$ to the furthest position from the center of $R$

4: $\bar{V} \leftarrow \bar{V}\backslash\bar{\mathcal{V}}.first$

5: **while** $\bar{V}$ has vertices **do**

6:     Map node $\bar{\mathcal{V}}.first$ to the furthest position from all nodes already mapped to an atom in $R$

7:     $\bar{\mathcal{V}} \leftarrow \bar{\mathcal{V}}\backslash\bar{\mathcal{V}}.first$

8: **end while**

9: Remove all atoms not mapped to any node from register $R$

10: **return** register $R$

Fig. 13

Europäisches
Patentamt

European
Patent Office

Office européen
des brevets

# EUROPEAN SEARCH REPORT

Application Number

EP 22 30 6775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WESLEY DA SILVA COELHO ET AL: "Efficient protocol for solving combinatorial graph problems on neutral-atom quantum processors", ARXIV.ORG, CORNELL UNIVERSITY LIBRARY, 201 OLIN LIBRARY CORNELL UNIVERSITY ITHACA, NY 14853, 2 August 2022 (2022-08-02), XP091285038, * abstract * * page 3 - page 14 * | 1-15 | INV. G06N10/60 |
| L | DEMIREL KENAN ET AL: "Ensemble Learning based on Regressor Chains: A Case on Quality Prediction :", PROCEEDINGS OF THE 8TH INTERNATIONAL CONFERENCE ON DATA SCIENCE, TECHNOLOGY AND APPLICATIONS, [Online] 26 July 2019 (2019-07-26), pages 267-274, XP093045904, DOI: 10.5220/0007932802670274 ISBN: 978-989-7583-77-3 Retrieved from the Internet: URL:https://www.scitepress.org/Papers/2019/79328/79328.pdf> [retrieved on 2023-05-08] * the whole document * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 10 May 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. KUMAR ; T. VIJAY KUMAR.** A novel quantum-inspired evolutionary view selection algorithm. *Sadhana,* 2018, vol. 43 (10), 1-20
- Quantum optimization for the graph coloring problem with space-efficient embedding. **Z. TABI ; K. H. EL-SAFTY ; Z. KALLUS ; P. H'AGA ; T. KOZSIK ; A. GLOS ; Z. ZIMBOR'AS.** 2020 IEEE International Conference on Quantum Computing and Engineering (QCE). IEEE, 2020, 56-62
- **TITILOYE ; CRISPIN.** Quantum annealing of the graph coloring problem. *Discrete Optimization,* 2011, vol. 8 (2), 376-384
- **SILVA et al.** Mapping graph coloring to quantum annealing. *Quantum Machine Intelligence,* 2020, vol. 2 (2), 1-19
- **KWOK ; PUDENZ.** *Graph coloring with quantum annealing,* 2020
- **FABRIKANT ; HOGG.** Graph coloring with quantum heuristics. *AAAI/IAAI,* 2002, 22-27
- **SHIMIZU ; MORI.** Exponential-time quantum algorithms for graph coloring problems. *Algorithmica,* 2022, 1-19
- **S. M. ARDELEAN ; M. UDRESCU.** Graph coloring using the reduced quantum genetic algorithm. *PeerJ Computer Science,* 2022, vol. 8, e836
- **VITALI, G. et al.** Towards optimal graph coloring using Rydberg atoms. *supercomputing,* 14 November 2021

- **NGUYEN, M. et al.** Quantum optimization with arbitrary connectivity using Rydberg atom arrays. Cornell university, September 2022
- **VERCELLINO, C. et al.** Neural-powered unit disk graph embedding: qubits connectivity for some QUBO problems. *IEEE Quantum Week,* 2022
- **CASTILLO J. ; PENA-BRAGE F.** Optimization of a refinery scheduling process with column generation and a quantum annealer. *Optimization and Engineering,* 2022, vol. 23, 1471-1488
- **T. ALBASH ; D. A. LIDAR.** Adiabatic quantum computation. *Reviews of Modern Physics,* 2018, vol. 90 (1), 015002
- **T. M. FRUCHTERMAN ; E. M. REINGOLD.** Graph drawing by force-directed placement. *Software: Practice and experience,* 1991, vol. 21 (11), 1129-1164
- Exact algorithms for the Vertex Coloring Problem and its generalisations. **I.-C. TERNIER.** PhD thesis. Universite Paris sciences et lettres, 2017
- **HAROLD J METCALF ; PETER VAN DER STRATEN.** Laser cooling and trapping of atoms. *JOSA B,* 2003, vol. 20 (5), 887-908
- **FLORENCE NOGRETTE ; HENNING LABUHN ; SYLVAIN DE LESELEUC ; THIERRY LAHAYE ; ANTOINE BROWAEYS.** Synthetic three-dimensional atomic structures assembled atom by atom. *Nature,* September 2018, vol. 561 (7721), 79-82